# EUROPEAN PATENT SPECIFICATION

(11) **EP 3 147 990 B1**
(45) Date of publication and mention of the grant of the patent: **26.02.2020**
(21) Application number: 16183388.4
(22) Date of filing: 09.08.2016
(51) Int. Cl.: H01M 12/08, B01D 71/02, C08J 5/22, H01B 1/06, B01D 67/00, B01D 69/14, H01M 4/38, H01M 2/14, H01M 2/16, H01M 10/052, H01M 10/056

(54) **COMPOSITE ELECTROLYTE FILM, ELECTROCHEMICAL CELL INCLUDING THE COMPOSITE ELECTROLYTE FILM, AND METHOD OF PREPARING THE COMPOSITE ELECTROLYTE FILM**
VERBUNDELEKTROLYTFILM, ELEKTROCHEMISCHE ZELLE MIT DEM VERBUNDELEKTROLYTFILM UND VERFAHREN ZUR HERSTELLUNG DES VERBUNDELEKTROLYTFILMS
FILM ÉLECTROLYTE COMPOSITE, CELLULE ÉLECTROCHIMIQUE COMPRENANT LE FILM ÉLECTROLYTE COMPOSITE ET PROCÉDÉ DE PRÉPARATION DU FILM ÉLECTROLYTE COMPOSITE

(30) Priority: 25.09.2015 KR 20150136557
(43) Date of publication of application: 29.03.2017
(73) Proprietor: Samsung Electronics Co., Ltd., Suwon-si, Gyeonggi-do 16677 (KR)
(72) Inventor: KIM, Mokwon, 16678 Gyeonggi-do (KR); KIM, Joonhee, 16678 Gyeonggi-do (KR); IM, Dongmin, 16678 Gyeonggi-do (KR); CHOI, Kyounghwan, 16678 Gyeonggi-do (KR)
(74) Representative: Elkington and Fife LLP

(56) References cited:
- US-A1- 2013 309 571
- US-A1- 2014 186 724
- US-A1- 2014 377 670
- US-A1- 2015 140 452
- US-A1- 2015 180 073
- SUN HWA LEE ET AL: "Li-Anode Protective Layers for Li Rechargeable Batteries via Layer-by-Layer Approaches", CHEMISTRY OF MATERIALS, vol. 26, no. 8, 24 March 2014 (2014-03-24) , pages 2579-2585, XP055311724, US ISSN: 0897-4756, DOI: 10.1021/cm404154u
- JIANHUA HUANG ET AL: "A comparison of standard methods for measuring water vapour permeability of fabrics", MEAS. SCI. TECHNOL. MEAS. SCI. TECHNOL, vol. 14, no. 14, 16 July 2003 (2003-07-16) , pages 1402-1408, XP055311614, DOI: 10.1088/0957-0233/14/8/328
- Mengying Yuan ET AL: "High performance solid polymer electrolyte with graphene oxide nanosheets", RSC Adv., vol. 4, no. 103, 1 January 2014 (2014-01-01), pages 59637-59642, XP055458364, DOI: 10.1039/C4RA07919A

## Description

### FIELD OF THE INVENTION

The present disclosure relates to a composite electrolyte film, an electrochemical cell including the composite electrolyte film, and methods of preparing the composite electrolyte film.

### BACKGROUND OF THE INVENTION

It is known that a metal air cell, which is a type of an electrochemical cell, includes an anode capable of depositing/dissolving metal ions, a cathode configured to oxidize/reduce oxygen in air, and a metal ion conductive media disposed between the cathode and the anode.

Since the metal air cell uses a metal itself as the anode and does not need to store air that is a positive electrode active material, the metal air cell is suitable for implementation of a high capacity cell. A theoretical energy density per unit weight of the metal air cell is very high, for example, about 3,500 Wh/kg or more. In a metal air cell, it is desirable to block oxygen such that a metal anode is not oxidized by oxygen. To this end, the metal air cell uses an oxygen barrier film, such as a ceramic solid electrolyte film, which has a low oxygen transmission rate. Since the ceramic solid electrolyte film is heavy and thick, a volume and a weight of a metal air cell, including the ceramic solid electrolyte film, increases. Accordingly, an energy density of the metal air cell decreases. In addition, the ceramic solid electrolyte film is brittle and inductile. Therefore, there is a need for an electrolyte film that is light, thin, and flexible and is capable of blocking oxygen. In addition, there is a need for a metal air cell that includes the electrolyte film to have an improved energy density.

US 2014/186724 discloses a protective layer which can be deposited on a surface of an porous polymer separator placing on a Li-metal electrode to protect against adverse electrochemical activity in a battery. The protective layer can be a multilayered structure including graphene oxide.

M. Yuan et al., RSC Advances, Issue 103, 2014, pp. 59637-59642, discloses two dimensional graphene oxide (GO) sheets which are introduced into a solid polyethylene oxide/lithium salt electrolyte.

### SUMMARY OF THE INVENTION

Provided is a composite electrolyte film having a 2D nanostructure.

Provided is an electrochemical cell including the composite electrolyte film.

Provided are methods of preparing the composite electrolyte film.

Additional aspects will be set forth in part in the description which follows and, in part, will be apparent from the description, or may be learned by practice of the presented exemplary embodiments.

According to an aspect of an exemplary embodiment, a composite electrolyte film according to claim 1 is provided.

According to an aspect of another exemplary embodiment, an electrochemical cell according to claim 9 is provided.

According to an aspect of another exemplary embodiment, a method of preparing a composite electrolyte film according to claim 15 is provided.

### BRIEF DESCRIPTION OF THE DRAWINGS

These and/or other aspects will become apparent and more readily appreciated from the following description of the exemplary embodiments, taken in conjunction with the accompanying drawings in which:
FIG. 1 is a schematic diagram of a composite electrolyte layer according to an exemplary embodiment;
FIG. 2 is a schematic diagram of a composite electrolyte film according to an exemplary embodiment;
FIGS. 3A and 3B are schematic diagrams of a composite electrolyte layer according to an exemplary embodiment;
FIG. 4 is a schematic diagram of a composite electrolyte layer according to an exemplary embodiment;
FIGS. 5 and 6 are schematic diagrams of a composite electrolyte film according to another exemplary embodiment;
FIG. 7 is a schematic diagram of an electrochemical cell according to an exemplary embodiment;
FIG. 8 is a schematic diagram of an electrochemical cell according to another exemplary embodiment;
FIG. 9 is a schematic diagram of an electrochemical cell according to another exemplary embodiment;
FIG. 10 is a schematic diagram of a three-dimensional (3D) electrochemical cell according to another exemplary embodiment;
FIGS. 11A to 11D are schematic diagrams for describing a method of preparing a composite electrolyte film, according to an exemplary embodiment;
FIG. 12 is a scanning electron microscope (SEM) image of a cross section in a separator coated with graphene oxide (GO), which is prepared in Example 1; and
FIG. 13 is a SEM image of a cross section in a composite electrolyte film prepared in Example 3.

### DETAILED DESCRIPTION OF THE EMBODIMENTS

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects. As used herein, the term "and/or" includes any and all combinations of one or more of the associated listed items. "Or" means "and/or." Expressions such as "at least one of," when preceding a list of elements, modify the entire list of elements and do not modify the individual elements of the list.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer, or section. Thus, "a first element," "component," "region," "layer," or "section" discussed below could be termed a second element, component, region, layer, or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "At least one" is not to be construed as limiting "a" or "an." It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Hereinafter, according to exemplary embodiments, a composite electrolyte film, an electrochemical cell including the composite electrolyte film, and a method of preparing the composite electrolyte film will be disclosed in further detail.

A composite electrolyte film according to the invention includes a composite electrolyte layer disposed on an ionically conductive substrate, a first domain that includes a plurality of two-dimensional (2D) nanostructures; and a second domain that is disposed in, e.g., occupies, interstitial spaces between neighboring two-dimensional nanostructures of the plurality of 2D nanostructures, wherein the second domain includes a first electrolyte, and wherein the composite electrolyte layer is disposed on at least one surface of the ionically conductive substrate.

Since the composite electrolyte film includes the plurality of 2D nanostructures, and the plurality of 2D nanostructures have barrier characteristics of preventing diffusion of oxygen from a cathode to the composite electrolyte film, a lithium anode may be protected from oxygen. The composite electrolyte film may function as an anode protection film or an oxygen barrier film. In addition, since the composite electrolyte film includes the first electrolyte disposed between the plurality of 2D nanostructures, the composite electrolyte film may have suitable ion conductivity (i.e., ionic conductivity). The composite electrolyte film may provide suitable ion conductivity and suitable oxygen barrier characteristics at the same time. Since the composite electrolyte film is flexible, the composite electrolyte film may be molded in various shapes. Since the composite electrolyte film is light in weight, compared to an inorganic material such as a ceramic, an electrochemical cell including the composite electrolyte film has improved energy density.

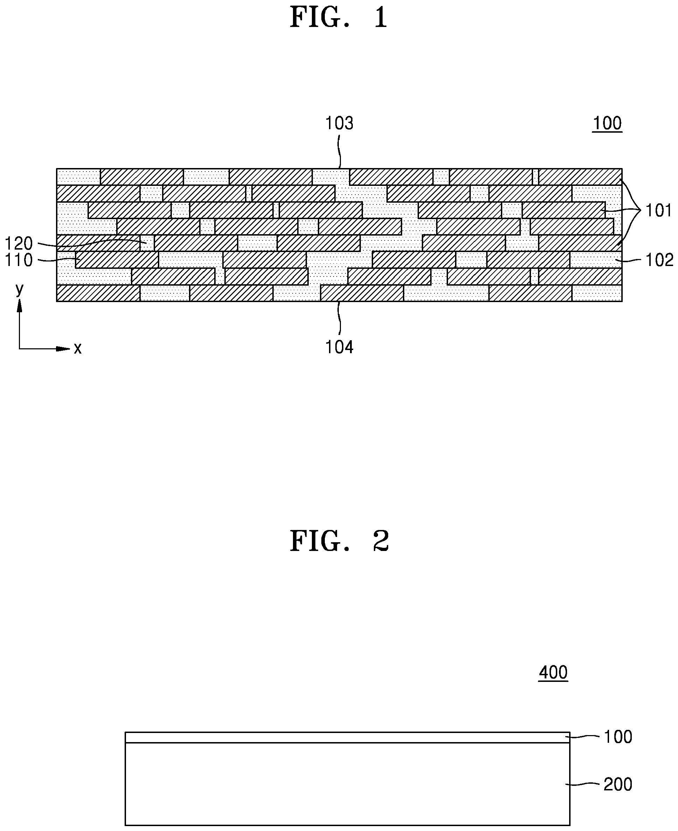

Referring to FIGS. 1 and 2, a composite electrolyte film 400 includes a composite electrolyte layer 100 including a first domain 101 that includes a plurality of 2D nanostructures 110; and a second domain 102 that occupies interstitial spaces 120 between the plurality of 2D nanostructures 110 and includes a first electrolyte.

Referring to FIG. 1, in the composite electrolyte layer 100, the first domain 101 may include the plurality of two-dimensional (2D) nanostructures 110 non-periodically arranged in a thickness direction (e.g., a y direction) of the composite electrolyte layer 100. In the composite electrolyte layer 100, the plurality of 2D nanostructures 110 may be randomly arranged in the thickness direction without having a specific periodicity. For example, in the composite electrolyte layer 100, the plurality of 2D nanostructures 110 may be spaced from one another by an irregular interval in the thickness direction.

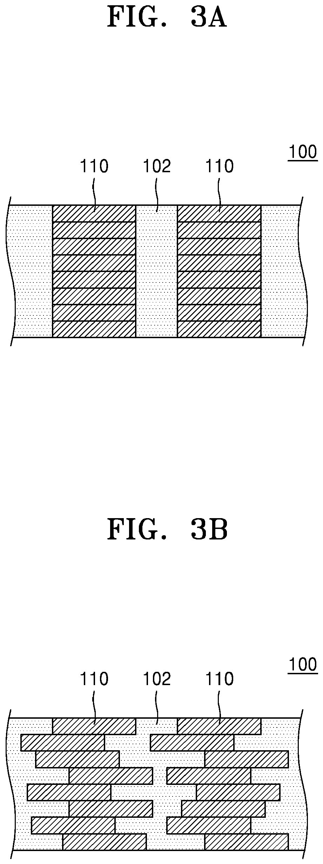

Referring to FIG. 1, in the composite electrolyte layer 100, the first domain 101 may include a disordered arrangement of the plurality of 2D nanostructures 110 in the thickness direction, e.g., a y direction as indicated in FIG. 1. For example, in a composite electrolyte layer 100, the plurality of 2D nanostructures 110 may have an ordered arrangement, such as the ordered arrangement of the plurality of 2D nanostructures 110 in the thickness direction illustrated in FIG. 3A. On the contrary, in a composite electrolyte layer 100, the plurality of 2D nanostructures 110 constituting the first domain 101 may be disordered in the thickness direction, such as is illustrated in FIG. 3B. In the composite electrolyte layer 100, since the plurality of 2D nanostructures 110 are disorderedly arranged in the thickness direction, a path of oxygen, which passes through the composite electrolyte layer 100, may be complicated and lengthened, thereby improving oxygen barrier characteristics. Alternatively, in a composite electrolyte layer 100, the plurality of 2D nanostructures 110 constituting the first domain 101 may be irregularly arranged in the thickness direction, such as is illustrated in FIG 1.

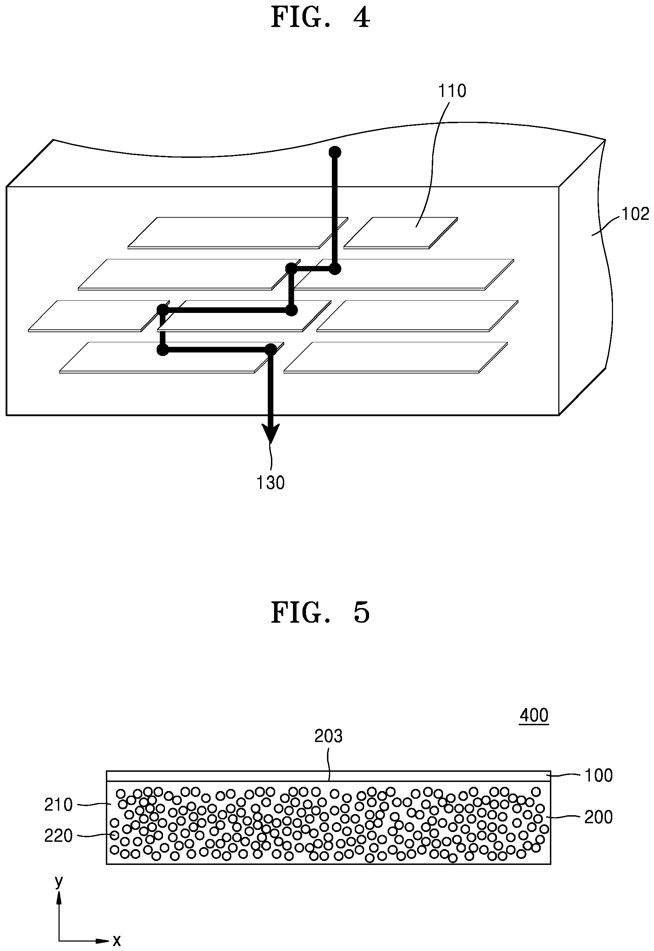

Referring to FIG. 1, in the composite electrolyte layer 100, the first domain 101 may include the plurality of 2D nanostructures 110 spaced apart from one another in a direction parallel to a first surface 103 of the composite electrolyte layer 100. Since the composite electrolyte layer 100 includes a tortuous path 130 formed in the interstitial spaces 120 between the plurality of 2D nanostructures 110, the composite electrolyte layer 100 may have suitable barrier characteristics. For example, referring to FIG. 4, since oxygen passes through the tortuous path 130 formed by the plurality of 2D nanostructures 110 that are spaced apart from one another in a direction parallel to the first surface 103 of the composite electrolyte layer 100 and a second surface 104 opposite to the first surface 103 and are laminated in the thickness direction of the composite electrolyte layer 100, the composite electrolyte layer 100 may have suitable barrier characteristics with respect to oxygen.

Referring to FIG. 1, in the composite electrolyte layer 100, the second domain 102 may ionically connect the first surface 103 of the composite electrolyte layer 100 and the second surface 104, which is opposite to the first surface 103. "Ionically connect" means that ions can be transferred between the elements which are connected, e.g., between the first surface 103 and the second surface 104. Since at least a portion of the first electrolyte included in the second domain 102 is continuously disposed between the first surface 103 and the second surface 104 of the composite electrolyte layer 100, lithium ions may be transferred from the first surface 103 of the composite electrolyte layer 100 to the second surface 104 thereof. Since the second domain 102 ionically connects the first surface 103 and the second surface 104 of the composite electrolyte layer 100, the composite electrolyte layer 100 may provide suitable gas barrier characteristics and suitable ion conductivity at the same time. When the second domain 102 is not able to ionically connect the first surface 103 and the second surface 104 of the composite electrolyte layer 100, the composite electrolyte layer 100 may substantially function as an insulating layer and increase an internal resistance of an electrochemical cell including the composite electrolyte layer 100.

Referring to FIGS. 1 to 4, in the composite electrolyte layer 100, the plurality of 2D nanostructures 110 may include a carbon-based material. For example, the plurality of 2D nanostructures 110 may include at least one selected from a carbon nanosheet, a carbon nanoplatelet, a carbon nanoflake, and a carbon nanobelt, but are not limited thereto. The plurality of 2D nanostructures 110 may include any suitable carbon-based material as long as the carbon-based material is applicable to a 2D nanostructure in the art. For example, the plurality of 2D nanostructures 110 may include graphene. For example, the plurality of 2D nanostructures 110 may include exfoliated graphene. Examples of the exfoliated graphene may include a single graphene layer or a plurality of graphene layers. For example, the plurality of 2D nanostructures 110 may include at least one selected from graphene oxide, reduced graphene oxide, and modified graphene oxide, but are not limited thereto. The plurality of 2D nanostructures 110 may include any suitable material as long as the material is applicable to graphene in the art. The reduced graphene oxide may be prepared by chemically reducing graphene oxide using a reducing agent, such as hydrazine or sodium borohydroride (NaBH₄), or by thermally reducing graphene oxide by a high temperature heat treatment at about 300°C to about 1,000°C. Reduced graphene may adjust interspacing of graphene according to a reduction degree. For example, as the reduction degree becomes higher, the interspacing of graphene may become smaller.

For example, the plurality of 2D nanostructures 110 may include deformed graphene. For example, the plurality of 2D nanostructures 110 may include at least one selected from wrinkled graphene and crumpled graphene, but are not limited thereto. The plurality of 2D nanostructures 110 may include any suitable deformed graphene as long as the deformed graphene is applicable to a 2D nanostructure in the art. Since the deformed graphene is able to increase the interspacing of graphene at the time of forming the first domain 101 within the composite electrolyte layer 100, the second domain 102 may be more easily impregnated. Accordingly, ion conductivity may be improved.

Referring to FIG. 1, in the composite electrolyte layer 100, the interspacing (d₀₀₂) of exfoliated graphene including a plurality of graphene layers may be in the range of about 1.2 nm to about 0.35 nm, about 1.1 nm to about 0.4 nm, or about 1 nm to about 0.45 nm. For example, the interspacing (d₀₀₂) of exfoliated graphene including the plurality of graphene layers may be in the range of about 0.7 nm to about 0.35 nm. For example, the interspacing (d₀₀₂) of exfoliated graphene including the plurality of graphene layers may be in the range of about 0.5 nm to about 0.35 nm. The oxygen transmission rate and the ion conductivity of the composite electrolyte layer 100 may be selected by selecting the interspacing (d₀₀₂) of exfoliated graphene.

Referring to FIG. 1, examples of the first electrolyte may include at least one selected from a solid electrolyte and a liquid electrolyte. In addition, examples of the first electrolyte may include at least one selected from a plurality of solid electrolytes and a plurality of liquid electrolytes.

The solid electrolyte may be an electrolyte that can maintain a fixed shape at room temperature and has suitable lithium ion conductivity. The liquid electrolyte may be a flowable electrolyte which has suitable lithium ion conductivity and does not maintain a fixed shape at room temperature such that a shape of the flowable electrolyte is determined according to a shape of a container containing the flowable electrolyte.

Even when the composite electrolyte layer 100 includes a liquid electrolyte as the first electrolyte, the composite electrolyte layer 100 may be in a solid state or a gel state at room temperature according to a content of the 2D nanostructures 110.

In the composite electrolyte layer 100, examples of the first electrolyte may include at least one selected from a solid electrolyte including a polymeric ionic liquid (PIL) and a lithium salt, a solid electrolyte including an ion conductive polymer and a lithium salt, a solid electrolyte including an ion conductive inorganic material, and a solid electrolyte including an electron conductive polymer, but are not limited thereto. The first electrolyte may include any suitable solid electrolyte as long as the solid electrolyte is applicable to an electrolyte of an electrochemical cell in the art.

Examples of the lithium salt included in the first electrolyte may include at least one selected from LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CxF₂ₓ₊₁SO₂)(CyF_{2y+1}SO₂) (where each of x and y is a natural number), LiCl, and LiI, but are not limited thereto. The lithium salt may include any suitable material as long as the material is applicable to a lithium salt in the art.

The PIL included in the first electrolyte may include a repeating unit that includes i) at least one cation selected from an ammonium cation, a pyrrolidinium cation, a pyridinium cation, a pyrimidinium cation, an imidazolium cation, a piperidinium cation, a pyrazolium cation, an oxazolium cation, a pyridazinium cation, a phosphonium cation, a sulfonium cation, a triazole cation, and mixtures thereof and includes ii) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, (CF₃SO₂)₂N⁻, Cl⁻, Br⁻, I⁻, BF₄⁻, SO₄⁻, PF₆⁻, ClO₄⁻, CF₃SO₃⁻, CF₃CO₂⁻, (C₂F₅SO₂)₂N⁻, (C₂F₅SO₂)(CF₃SO₂)N⁻, NO₃⁻, Al₂Cl₇⁻, AsF₆⁻, SbF₆⁻, CF₃COO⁻, CH₃COO⁻, CF₃SO₃⁻, (CF₃SO₂)₃C⁻, (CF₃CF₂SO₂)₂N⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, (O(CF₃)₂C₂(CF₃)₂O)₂PO⁻, and (CF₃SO₂)₂N⁻.

Examples of the PIL may include at least one selected from poly(diallyldimethylammonium) bis(trifluoromethanesulfonyl)imide (DAM TFSI), 1-Allyl-3-methylimidazolium bis(trifluoromethylsulfonyl)imide, and poly((N-Methyl-N-propylpiperidinium bis(trifluoromethanesulfonyl)imide).

Examples of the ion conductive inorganic material included in the first electrolyte may include at least one selected from a glassy or amorphous metal ion conductor, a ceramic active metal ion conductor, and a glass-ceramic active metal ion conductor, but are not limited thereto. The ion conductive inorganic material may include any suitable material as long as the material is applicable to an ion conductive inorganic material in the art. The ion conductive inorganic material may be an ion conductive inorganic particle.

Examples of the ion conductive inorganic material may include at least one selected from BaTiO₃, Pb(Zr,Ti)O₃ (PZT), Pb₁₋ₓLaₓZr_{1-y}Ti_{y}O₃ (PLZT) (where 0≤x<1, and 0≤y<1), Pb(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, SiC, lithium phosphate (Li₃PO₄), lithium titanium phosphate (LiₓTi_{y}(PO₄)₃, where 0<x<2, and 0<y<3), lithium aluminum titanium phosphate (LiₓAl_{y}Ti_{z}(PO₄)₃, where 0<x<2, 0<y<1, and 0<z<3), Li_{1+x+y}(Al, Ga)x(Ti, Ge)₂₋ₓSi_{y}P_{3-y}O₁₂ (where 0≤x≤1, and 0≤y≤1), lithium lanthanum titanate (e.g., LiₓLa_{y}TiO₃, where 0<x<2, and 0<y<3), lithium germanium thiophosphate (e.g., LiₓGe_{y}P_{z}S_{w}, where 0<x<4, 0<y<1, 0<z<1, and 0<w<5), lithium nitride (e.g., LiₓN_{y}, where 0<x<4, and 0<y<2), SiS₂ (LiₓSi_{y}S_{z}, where 0<x<3, 0<y<2, and 0<z<4)-based glass, P₂S₅ (e.g., LiₓP_{y}S_{z}, where 0<x<3, 0<y<3, and 0<z<7)-based glass, Li₂O, LiF, LiOH, Li₂CO₃, LiAlO₂, a Li₂O-Al₂O₃-SiO₂-P₂O₅-TiO₂-GeO₂-based ceramic, and a garnet-based ceramic (e.g., Li₃₊ₓLa₃M₂O₁₂, where M = Te, Nb, or Zr).

The ion conductive polymer included in the first electrolyte may be a polymer that includes an ion conductive repeating unit on a main chain or a side chain. The ion conductive repeating unit may include any unit as long as the unit has suitable ion conductivity. For example, the ion conductive repeating unit may include at least one selected from a C1 to C20 alkylene oxide unit such as ethylene oxide, a hydrophilic unit, and the like.

Examples of the ion conductive polymer may include at least one ion conductive repeating unit selected from an ether-based monomer, an acryl-based monomer, a methacryl-based monomer, and a siloxane-based monomer. "Acryl" includes acrylic and (C1 to C20 alkyl)acrylate, and "methacryl" includes methacrylic and (C1 to C20alkyl)methacrylate.

Examples of the ion conductive polymer may include at least one selected from polyethylene oxide, polypropylene oxide, polymethyl methacrylate, polyethyl methacrylate, polydimethylsiloxane, polyacrylic acid, polymethacrylic acid, polymethyl acrylate, polyethyl acrylate, poly(2-ethylhexyl acrylate), poly butyl methacrylate, poly(2-ethylhexyl methacrylate), poly(decyl acrylate), and polyethylene vinyl acetate.

Examples of the ion conductive polymer may include at least one selected from a polyethylene (PE) derivative, a polyethylene oxide (PEO) derivative, a polypropylene oxide (PPO) derivative, a phosphate ester polymer, polyester sulfide, polyvinyl alcohol (PVA), polyvinylidene fluoride (PVdF), and a polymer including an ionic dissociable group such as lithium-exchanged Nafion (lithium Nafion), but are not limited thereto. The ion conductive polymer may include any suitable material as long as the material is applicable to an ion conductive polymer in the art.

For example, referring to FIG. 1, the first electrolyte may include at least one selected from polyethylene oxide (PEO), polyvinyl alcohol (PVA), polyvinylpyrrolidone (PVP), and polyvinyl sulfone.

Referring to FIGS. 1 to 4, the composite electrolyte layer 100 may have a thickness of about 1 µm or less. For example, the thickness of the composite electrolyte layer 100 may be in the range of about 5 nm to about 1 µm. For example, the thickness of the composite electrolyte layer 100 may be in the range of about 5 nm to about 800 nm. For example, the thickness of the composite electrolyte layer 100 may be in the range of about 10 nm to about 500 nm. For example, the thickness of the composite electrolyte layer 100 may be in the range of about 50 nm to about 400 nm. For example, the thickness of the composite electrolyte layer 100 may be in the range of about 100 nm to about 300 nm. For example, the thickness of the composite electrolyte layer 100 may be in the range of about 200 nm to about 300 nm.

Referring to FIGS. 1 to 4, in the composite electrolyte layer 100, a composition ratio of the 2D nanostructures 110 to the first electrolyte may be less than about 1:4 based on weight. That is, in the composite electrolyte layer 100, the first electrolyte may be reduced to be less than about 400 parts by weight with respect to about 100 parts by weight of the 2D nanostructures 110. It may be possible to improve the oxygen barrier characteristics of the composite electrolyte film 400 including the composite electrolyte layer 100. For example, in the composite electrolyte layer 100, the composition ratio of the 2D nanostructures 110 to the first electrolyte may be less than about 1:3 based on weight. For example, in the composite electrolyte layer 100, the composition ratio of the 2D nanostructures 110 to the first electrolyte may be in the range of about 1:2 to about 1:0.5 based on weight, but is not limited to this range. The composition ratio of the 2D nanostructures 110 to the first electrolyte may be appropriately selected to be within a range in which the composite electrolyte film 400 including the composite electrolyte layer 100 provides improved oxygen barrier characteristics.

Referring to FIG. 2, the composite electrolyte film 400 further includes an ion conductive substrate 200 and includes the composite electrolyte layer 100 disposed on at least one surface of the ion conductive substrate 200. The ion conductive substrate 200 may function as a support for the composite electrolyte layer 100. Since the composite electrolyte layer 100 is disposed on the ion conductive substrate 200, the composite electrolyte film 400 may provide a free standing film.

Referring to FIG. 5, in a composite electrolyte film 400, an ion conductive substrate 200 may include a porous membrane 210 and a second electrolyte impregnated in the porous membrane 210. The second electrolyte may be impregnated in a plurality of pores 220 of the porous membrane 210. Since the ion conductive substrate 200 includes the second electrolyte impregnated in the porous membrane 210, the ion conductive substrate 200 may have improved ion conductivity.

For example, since an ion conductive polyelectrolyte is impregnated in a flow path formed by connecting the plurality of pores 220 irregularly arranged in the porous membrane 210, the ion conductive polyelectrolyte may be exposed on a first surface of the porous membrane 210 and a second surface, which is opposite to the first surface to thereby provide a transfer path of active metal ions.

For example, although not illustrated in FIG. 5, the ion conductive substrate 200 may include a porous membrane having a plurality of through-holes that penetrate the first surface of the porous membrane 210 and the second surface, which is opposite to the first surface. Since the ion conductive polyelectrolyte is impregnated in the plurality of through-holes and in the porous membrane having the plurality of through-holes, the ion conductive substrate 200 may have suitable ion conductivity.

Referring to FIG. 5, in the ion conductive substrate 200, a composition ratio of the porous membrane 210 to the second electrolyte may be less than about 1:4.5 based on weight. That is, in the ion conductive substrate 200, the second electrolyte may be reduced to be less than about 450 parts by weight with respect to about 100 parts by weight of the porous membrane 210. It may be possible to improve an energy density of an electrochemical cell including the ion conductive substrate 200. For example, in the ion conductive substrate 200, the composition ratio of the porous membrane 210 to the second electrolyte may be about 1:4 or less based on weight. For example, in the ion conductive substrate 200, the composition ratio of the porous membrane 210 to the second electrolyte may be about 1:3.5 or less based on weight. For example, in the ion conductive substrate 200, the composition ratio of the porous membrane 210 to the second electrolyte may be about 1:3 or less based on weight. For example, in the ion conductive substrate 200, the composition ratio of the porous membrane 210 to the second electrolyte may be about 1:2.5 or less based on weight. For example, in the ion conductive substrate 200, the composition ratio of the porous membrane 210 to the second electrolyte may be about 1:0.1 or more based on weight. For example, in the ion conductive substrate 200, the composition ratio of the porous membrane 210 to the second electrolyte may be about 1:0.5 or more based on weight. For example, in the ion conductive substrate 200, the composition ratio of the porous membrane 210 to the second electrolyte may be about 1:4.0 to about 1:0.1, or about 1:3.5 to about 1:0.5. For example, in the ion conductive substrate 200, the composition ratio of the porous membrane 210 to the second electrolyte may be in the range of about 1:2.3 to about 1:4.5 based on weight, but is not limited to the range. The composition ratio of the porous membrane 210 to the second electrolyte may be appropriately changed within a range in which the electrochemical cell including the ion conductive substrate 200 to provide an improved energy density.

Referring to FIG. 5, the second electrolyte may have a concentration gradient in a direction (e.g., a y direction) from a first surface 203 of the ion conductive substrate 200 to a second surface 204 opposite to the first surface 203. That is, the second electrolyte may have the concentration gradient such that the second electrolyte is not homogeneously distributed but is inhomogeneously distributed within the ion conductive substrate 200. The second electrolyte may have the concentration gradient, thereby improving charge/discharge characteristics of the electrochemical cell including the ion conductive substrate 200. The concentration gradient of the second electrolyte may be continuous or discontinuous, and may be linear or nonlinear. For example, the concentration gradient of the second electrolyte may be continuously or discontinuously changed from the first surface 203 of the ion conductive substrate 200 to the second surface 204, which is opposite to the first surface 203.

For example, a concentration of the second electrolyte at a middle point between the first surface 203 and the second surface 204 of the ion conductive substrate 200 may be less than a concentration of the second electrolyte at each of the first surface 203 of the ion conductive substrate 200 and the second surface 204, which is opposite to the first surface 203. That is, the second electrolyte may have a U-shaped or V-shaped concentration gradient in which the concentration of the second electrolyte decreases and then increases in a thickness direction (e.g., a y direction) of the ion conductive substrate 200. In the ion conductive substrate 200, a profile of the concentration gradient in the second electrolyte may be symmetric with respect to the middle point between the first surface 203 and the second surface 204 of the ion conductive substrate 200. The concentration of the second electrolyte may be greatest at each of the first surface 203 of the ion conductive substrate 200 and the second surface 204, which is opposite to the first surface 203. The concentration of the second electrolyte may be the least at any point within the ion conductive substrate 200. For example, there may be no second electrolyte at a certain point within the ion conductive substrate 200. The concentration of the second electrolyte at the middle point between the first surface 203 and the second surface 204 of the ion conductive substrate 200 may be less than the concentration of the second electrolyte at each of the first surface 203 and the second surface 204 of the ion conductive substrate 200, thereby reducing an interfacial resistance when the ion conductive substrate 200 comes into contact with other electrochemical cell members, for example, a cathode and an anode.

Referring to FIG. 5, a thickness of the ion conductive substrate 200 may be in the range of about 1 µm to about 200 µm. For example, the thickness of the ion conductive substrate 200 may be in the range of about 2 µm to about 150 µm. For example, the thickness of the ion conductive substrate 200 may be in the range of about 3 µm to about 100 µm. For example, the thickness of the ion conductive substrate 200 may be in the range of about 5 µm to about 50 µm. For example, the thickness of the ion conductive substrate 200 may be in the range of about 5 µm to about 30 µm. For example, the thickness of the ion conductive substrate 200 may be in the range of about 5 µm to about 20 µm.

Referring to FIG. 5, in the composite electrolyte film 400, the second electrolyte included in the ion conductive substrate 200 may be substantially the same as a first electrolyte included in a composite electrolyte layer 100. In the composite electrolyte film 400, since the second electrolyte included in the ion conductive substrate 200 may be the same as the first electrolyte included in the composite electrolyte layer 100, the composite electrolyte film 400 may include a single electrolyte. Accordingly, the composite electrolyte film 400 may provide uniform ion conductivity. The above-mentioned first electrolyte may be referenced for a specific type or the like of the second electrolyte.

Referring to FIG. 5, examples of the porous membrane 210 may include at least one selected from a polymer non-woven fabric such as at least one selected from a polypropylene non-woven fabric, a polyimide non-woven fabric, and a polyphenylene sulfide non-woven fabric; and a porous membrane including an olefin-based resin such at least one selected from as polyethylene, polypropylene, polybutene, and polyvinylchloride, but are not limited thereto. The porous membrane 210 may include any suitable material as long as the material is applicable to a material of a porous membrane in the art. For example, the porous membrane 210 may include a polymer that is substantially the same as a polymer included in a porous membrane having a through-hole described below.

Although not illustrated in FIG. 5, the porous membrane 210 may have a multilayered structure that includes two or more layers. For example, the porous membrane 210 may have a two-layer structure, a three-layer structure, a four-layer structure, a five-layer structure, or the like. For example, the porous membrane 210 may have a two-layer structure that includes a porous polymer layer and an inorganic material layer disposed on a first surface of the porous polymer layer. For example, the porous membrane 210 may have a three-layer structure that includes a porous polymer layer and inorganic material layers disposed on a first surface of the porous polymer layer and a second surface opposite to the first surface. The inorganic material layer may be a particle layer including metal oxide. The metal oxide may include, for example, alumina.

Referring to FIG. 5, the ion conductive substrate 200 may be a gas and moisture barrier film. Since moisture and a gas such as oxygen are blocked by the ion conductive substrate 200, an anode adjacent to the ion conductive substrate 200 may be prevented from being deteriorated by the oxygen, the moisture, or the like.

For example, the porous membrane 210 included in the ion conductive substrate 200 may include a polymer having suitable gas and moisture barrier characteristics. Since the porous membrane 210 included in the ion conductive substrate 200 blocks a gas and moisture, the ion conductive substrate 200 may protect an anode. Therefore, the composite electrolyte film 400 including the ion conductive substrate 200 may function as a protective membrane. In an embodiment, the polymer having gas and moisture barrier characteristics as a water vapor transmission rate of less than about 1 g/m² per day, or about 0.001 g/m² per day to about 1 g/m² per day, or about 0.01 g/m² per day to about 0.5 g/m² per day, when measured using a 25 micrometer film and 25°C.

Examples of the polymer having the gas and moisture barrier characteristics may include at least one selected from poly(2-vinyl pyridine); polytetrafluoroethylene; a tetrafluoroethylene-hexafluoropropylene copolymer; polychlorotrifluoroethylene; a perfluoroalkoxy copolymer; fluorinated cyclic ether; polyethylene oxide diacrylate; polyethylene oxide dimethacrylate; polypropylene oxide diacrylate; polypropylene oxide dimethacrylate; polymethylene oxide diacrylate; polymethylene oxide dimethacrylate; poly((C1 to C20)alkyldiol diacrylate); poly((C1 to C20)alkyldiol dimethacrylate); polydivinylbenzene; polyether; polycarbonate; polyamide; polyester; polyvinyl chloride; polyimide; polycarboxylic acid; polysulfonic acid; polyvinyl alcohol; polysulfone; polystyrene; polyethylene; polypropylene; poly(p-phenylene); polyacetylene; poly(p-phenylene vinylene); polyaniline; polypyrrole; polythiophene; poly(2,5-ethylene vinylene); polyacene; poly(naphthalene-2,6-diyl); polyethylene oxide; polypropylene oxide; polyvinylidene fluoride; a copolymer of vinylidene fluoride and hexafluoropropylene; polyvinyl acetate; poly(vinyl butyral-co-vinyl alcohol-co-vinyl acetate); poly(methyl methacrylate-co-ethyl acrylate); polyacrylonitrile; polyvinyl chloride-co-vinyl acetate; poly(1-vinylpyrrolidone-co-vinyl acetate); polyvinylpyrrolidone; polyacrylate; polymethacrylate; polyurethane; polyvinyl ether; acrylonitrile-butadiene rubber; styrene-butadiene rubber; acrylonitrile-butadiene-styrene rubber; a sulfonated styrene/ethylene-butylene triblock copolymer; a polymer obtained from at least one acrylate monomer selected from ethoxylated neopentyl glycol diacylate, ethoxylated bisphenol A diacrylate, ethoxylated aliphatic urethane acrylate, an ethoxylated (C1 to C20)alkylphenol acrylate, and a (C1 to C20)alkyl acrylate; polyvinyl alcohol; polyimide; an epoxy resin; and an acrylic resin, but are not limited thereto. The polymer having the gas and moisture barrier characteristics may include any suitable polymer as long as the polymer has suitable gas and moisture barrier characteristics in the art.

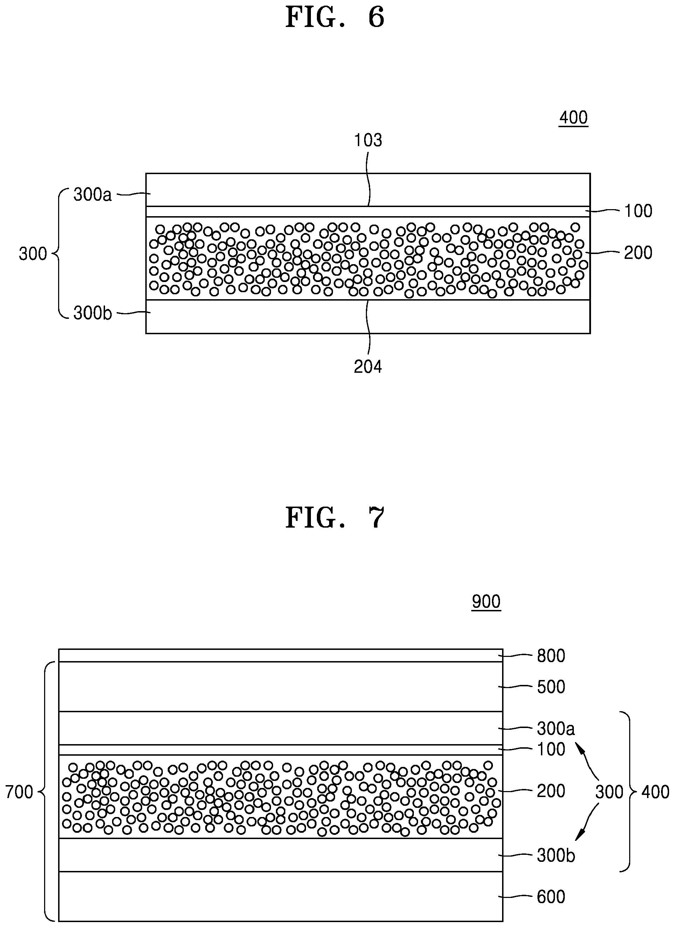

Referring to FIG. 6, the composite electrolyte film 400 includes an electrolyte layer 300 that may include a third electrolyte. The electrolyte layer 300 which may include the third electrolyte may be disposed on a first surface 103 of the composite electrolyte layer 100 and is disposed on the second surface 204 of the ion conductive substrate 200. For example, the composite electrolyte film 400 may further include a first electrolyte layer 300a disposed on the first surface 103 of the composite electrolyte layer 100. For example, the composite electrolyte film 400 may further include the first electrolyte layer 300a and a second electrolyte layer 300b, which are respectively disposed on the first surface 103 of the composite electrolyte layer 100 and the second surface 204 of the ion conductive substrate 200. The composite electrolyte film 400 may further include the first and second electrolyte layers 300a and 300b, thereby reducing an interfacial resistance when the composite electrolyte film 400 comes into contact with a cathode and an anode.

Referring to FIG. 6, in the composite electrolyte film 400, a thickness of each of the first and second electrolyte layers 300a and 300b may be in the range of about 1 µm to about 200 µm. For example, the thickness of each of the first and second electrolyte layers 300a and 300b may be in the range of about 1 µm to about 100 µm. For example, the thickness of each of the first and second electrolyte layers 300a and 300b may be in the range of about 1 µm to about 50 µm. For example, the thickness of each of the first and second electrolyte layers 300a and 300b may be in the range of about 1 µm to about 30 µm. For example, the thickness of each of the first and second electrolyte layers 300a and 300b may be in the range of about 1 µm to about 20 µm. For example, the thickness of each of the first and second electrolyte layers 300a and 300b may be in the range of about 1 µm to about 10 µm.

Referring to FIG. 6, in the composite electrolyte film 400, the third electrolyte included in the electrolyte layers 300 (e.g., first and second electrolyte layers 300a and 300b, respectively) may be substantially the same as, or the same as, the first electrolyte included in the composite electrolyte layer 100 and the second electrolyte included in the ion conductive substrate 200. In the composite electrolyte film 400, since the third electrolyte included in the electrolyte layers 300 (e.g., first and second electrolyte layers 300a and 300b, respectively) is the same as, or substantially the same as, the first electrolyte included in the composite electrolyte layer 100 and the second electrolyte included in the ion conductive substrate 200, the composite electrolyte film 400 may include a single electrolyte. Accordingly, the composite electrolyte film 400 may provide uniform ion conductivity. The above-mentioned first electrolyte may be referenced for a specific type or the like of the third electrolyte.

Referring to FIGS. 2, 5, and 6, the composite electrolyte film 400 may have a weight per unit area of about 20 milligrams per square centimeter (mg/cm²) or less, e.g., about 1 mg/cm² to about 20 mg/cm². For example, the composite electrolyte film 400 may have a weight per unit area of about 15 mg/cm² or less. For example, the composite electrolyte film 400 may have a weight per unit area of about 10 mg/cm² or less. For example, the composite electrolyte film 400 may have a weight per unit area of about 5 mg/cm² or less. For example, the composite electrolyte film 400 may have a weight per unit area of about 4 mg/cm² or less. Since the composite electrolyte film 400 has a weight per unit area of 20 mg/cm² or less, it may be possible to decrease a weight of an electrochemical cell including the composite electrolyte film 400. Accordingly, an energy density may be improved. For example, LTAP (Li_{1.4}Ti_{1.6}Al_{0.4}P3O₁₂), which is a ceramic solid electrolyte film, may have a weight per unit area of about 88 mg/cm².

Referring to FIGS. 2, 5, and 6, the composite electrolyte film 400 may have an oxygen transmission rate of about 450 milliliters per square meter per day (mL/m²·day) or less, e.g., about 450 mL/m²·day to about 10 mL/m²·day. For example, the composite electrolyte film 400 may have an oxygen transmission rate of about 400 mL/m²·day or less. For example, the composite electrolyte film 400 may have an oxygen transmission rate of about 350 mL/m²·day or less. For example, the composite electrolyte film 400 may have an oxygen transmission rate of about 300 mL/m²·day or less. For example, the composite electrolyte film 400 may have an oxygen transmission rate of about 250 mL/m²·day or less. For example, the composite electrolyte film 400 may have an oxygen transmission rate of about 200 mL/m²·day or less. For example, the composite electrolyte film 400 may have an oxygen transmission rate of about 150 mL/m²·day or less. Since the composite electrolyte film 400 has a low oxygen transmission rate of about 450 mL/m²·day or less, it may be possible to prevent a metal anode from being oxidized by oxygen. Accordingly, the deterioration of the electrochemical cell may be prevented. Therefore, it may be possible to improve the battery life characteristics of the electrochemical cell. For example, an electrolyte film including a porous organic membrane, in which an ion conductive solid electrolyte is impregnated, may have an oxygen transmission rate of about 9,000 mL/m²·day or more.

Referring to FIGS. 2, 5, and 6, the composite electrolyte film 400 may have an ionic resistance of about 200 ohms per square centimeter (ohm·cm²) or less, e.g., about 200 ohm·cm² to about 20 ohm·cm². For example, the composite electrolyte film 400 may have an ionic resistance of about 180 ohm·cm² or less. For example, the composite electrolyte film 400 may have an ionic resistance of about 160 ohm·cm² or less. For example, the composite electrolyte film 400 may have an ionic resistance of about 150 ohm·cm² or less. For example, the composite electrolyte film 400 may have an ionic resistance of about 140 ohm·cm² or less. For example, the composite electrolyte film 400 may have an ionic resistance of about 130 ohm·cm² or less. For example, the composite electrolyte film 400 may have an ionic resistance of about 120 ohm·cm² or less. Since the composite electrolyte film 400 has a low ionic resistance of about 200 ohm·cm² or less, it may be possible to decrease an internal resistance of the electrochemical cell including the composite electrolyte film 400. Accordingly, charge/discharge efficiency may be improved. For example, the LTAP (Li_{1.4}Ti_{1.6}Al_{0.4}P₃O₁₂), i.e., the ceramic solid electrolyte film may have an ionic resistance of about 260 ohm·cm².

Referring to FIGS. 2, 5, and 6, the composite electrolyte film 400 may have a thickness of about 200 micrometers (µm) or less, e.g., a thickness of about 200 µm to about 5 µm. For example, the composite electrolyte film 400 may have a thickness of about 150 µm or less. For example, the composite electrolyte film 400 may have a thickness of about 100 µm or less. For example, the composite electrolyte film 400 may have a thickness of about 50 µm or less. For example, the composite electrolyte film 400 may have a thickness of about 40 µm or less. For example, the composite electrolyte film 400 may have a thickness of about 35 µm or less. For example, the composite electrolyte film 400 may have a thickness of about 30 µm or less. Since the composite electrolyte film 400 has a thin thickness of about 200 µm or less, it may be possible to decrease a volume of the electrochemical cell including the composite electrolyte film 400. Accordingly, an energy density may be improved. For example, the LTAP (Li_{1.4}Ti_{1.6}Al_{0.4}P₃O₁₂), i.e., the ceramic solid electrolyte film may have a thickness of about 260 µm.

Referring to FIG. 7, an electrochemical cell 900 according to an exemplary embodiment may include a cathode 500; an anode 600; and the aforementioned composite electrolyte film 400 disposed between the cathode 500 and the anode 600. The composite electrolyte film 400 may include a composite electrolyte layer 100, an ion conductive substrate 200, and electrolyte layers 300 which comprises a first electrolyte layer 300a and a second electrolyte layer 300b. Since the electrochemical cell 900 includes the composite electrolyte film 400 that is light in weight and thin and has enhanced oxygen barrier characteristics, the electrochemical cell 900 may have an improved energy density and improved battery life characteristics.

Referring to FIG. 7, the anode 600 of the electrochemical cell 900 may include at least one selected from lithium and a lithium alloy. That is, an active metal anode may include at least one selected from lithium and an alloys including lithium as a primary component.

A lithium metal thin film may be used as the anode 600 of the electrochemical cell 900 as it is. When the lithium metal thin film is used as the anode 600 as it is, a volume and a weight occupied by a current collector may be reduced, thereby improving the energy density of the electrochemical cell 900. Alternatively, the lithium metal thin film may be used in a state of being disposed on a conductive substrate that is a current collector. The lithium metal thin film may be integrated within the current collector. Examples of the current collector may include at least one selected from stainless steel, copper, nickel, iron, and titanium, but are not limited thereto. The current collector may include any suitable metallic substrate as long as the metallic substrate has suitable conductivity and is applicable to the art.

An alloy of a lithium metal and other negative electrode active material may be used as the anode 600 of the electrochemical cell 900. The other negative electrode active material may include a lithium-alloyable metal. Examples of the lithium-alloyable metal may include at least one selected from silicon (Si), tin (Sn), aluminum (Al), germanium (Ge), lead (Pb), bismuth (Bi), antimony (Sb), and a Si-Y' alloy (where Y' includes one selected from an alkali metal, an alkaline earth metal, a Group 13 element, a Group 14 element, a transition metal, a rare earth element, and combinations thereof and does not include Si), or may include an Sn--Y" alloy (where Y" includes one selected from an alkali metal, an alkaline earth metal, a Group 13 element, a Group 14 element, a transition metal, a rare earth element, and combinations thereof and does not include Sn). The elements Y' and Y" may each independently include at least one selected from magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium(ln), titanium (Ti), germanium (Ge), phosphorus (P), arsenic (As), antimony (Sb), bismuth (Bi), sulfur (S), selenium (Se), tellurium (Te), polonium (Po), and combinations thereof. For example, a lithium alloy may include at least one selected from a lithium-aluminum alloy, a lithium-silicon alloy, a lithium-tin alloy, lithium-silver alloy, and a lithium-lead alloy.

In the electrochemical cell 900, a thickness of the anode 600 may be about 10 µm or more. The thickness of the anode 600 may be in the range of about 10 µm to about 20 µm, about 20 µm to about 60 µm, about 60 µm to about 100 µm, about 100 µm to about 200 µm, about 200 µm to about 600 µm, about 600 µm to about 1000 µm, about 1 mm to about 6 mm, about 6 mm to about 10 mm, about 10 mm to about 60 mm, about 60 mm to about 100 mm, or about 100 mm to about 600 mm.

Referring to FIG. 7, the electrochemical cell 900 may further include a gas diffusion layer 800 that is disposed on a surface of the cathode 500 in an electrode-film assembly 700. Air including oxygen may be diffused into the gas diffusion layer 800 and may be supplied to the electrochemical cell 900. The gas diffusion layer 800 may be electrically conductive. Since the gas diffusion layer 800 has suitable electrical conductivity, the gas diffusion layer 800 may function as a positive current collector. The gas diffusion layer 800 may include at least one selected from a porous carbon-based material and a porous metal, but is not limited thereto. The gas diffusion layer 800 may include any suitable material as long as the material is applicable to a conductive gas diffusion layer in the art. For example, the porous carbon-based material may include a carbon fiber non-woven fabric or the like. Since a conductive carbon-based gas diffusion layer has a density less than a density of a metal, the energy density of the electrochemical cell 900 may be further improved.

Although not illustrated in FIG. 7, the electrochemical cell 900 may further include a positive current collector that is disposed to come into contact with the gas diffusion layer 800 and/or the cathode 500. A position, at which the positive current collector is disposed, may not be particularly limited and may be selected according to a shape of the electrochemical cell 900 to be manufactured.

The positive current collector may include a netlike or mesh-shaped porous body so as to permit rapid diffusion of oxygen and may include a porous metal plate such as stainless steel, nickel, or aluminum. The positive current collector is not limited thereto, and may include any suitable material as long as the material is applicable to a current collector in the art. In order to prevent oxidation of the current collector, the current collector may be covered with an oxidation-resistant metal or an alloy film.

Although not illustrated in FIG. 7, the electrochemical cell 900 may further include a negative current collector that is disposed to come into contact with the anode 600. A position, at which the negative current collector is disposed, may not be particularly limited and may be selected according to a shape of the electrochemical cell 900 to be manufactured, within a range in which a short-circuit does not occur between the negative current collector and the positive current collector.

The negative current collector may include a porous metal plate such as stainless steel, nickel, or aluminum, but is not limited thereto. The negative current collector may include any suitable material as long as the material is applicable to a current collector in the art.

In the electrochemical cell 900, the electrode-film assembly 700 may include at least one folded portion. Since the electrode-film assembly 700 includes at least one folded portion, the electrochemical cell 900 may be easily molded in various shapes.

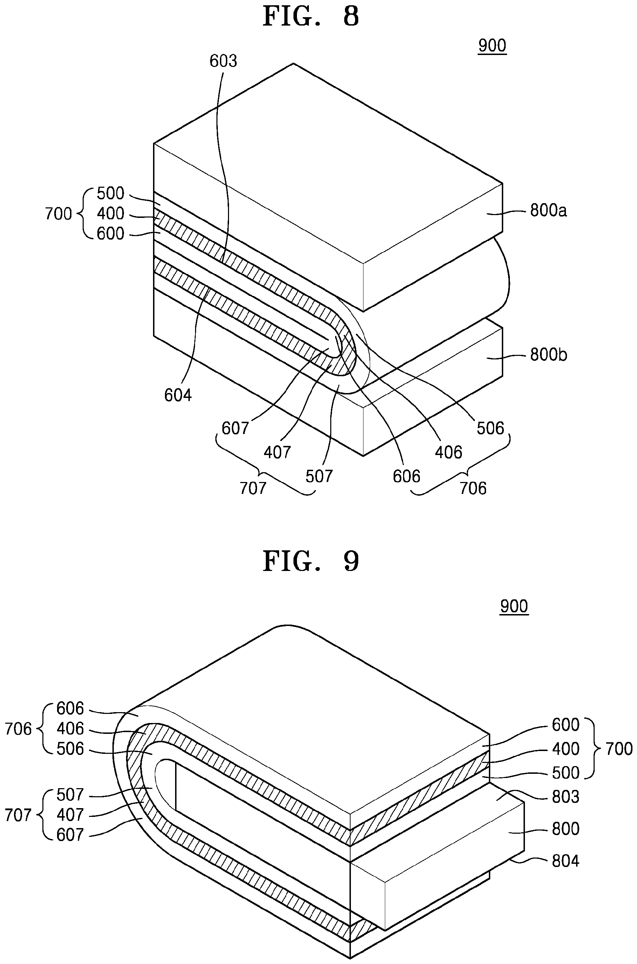

Referring to FIGS. 8 and 9, in an electrochemical cell 900, an electrode-film assembly 700 may include a cathode 500, an anode 600, and a composite electrolyte film 400, and the electrode-film assembly may comprise at least one folded portion, such as first and second folded portions 706 and 707 as shown in FIG. 8. The anode 600 included in the electrode-film assembly 700 may have at least one folded portion, such as first and second folded anode portions 606 and 607 as shown in FIG. 8. The cathode 500 may have one or more folded portions, such as first and second folded cathode portions 506 and 507 as shown in FIG. 8. The composite electrolyte film 400 may have at least one folded portion, such as first and second folded composite electrolyte film portions 406 and 407 as shown in FIG. 8.

Referring to FIG. 8, in the electrochemical cell 900, the electrode-film assembly 700 may be folded at an angle of about 180° such that at least two portions of the anode 600 overlap each other. Each of a first surface 603 of the folded anode 600 and a second surface 604 opposite to the first surface 603 may come into contact with the composite electrolyte film 400, so that active metal ions may be transferred to the anode 600. Therefore, the discharge capacity and the energy density of the electrochemical cell 900 may be improved compared to an electrochemical cell that has the same weight as the electrochemical cell 900 and is able to transfer active metal ions only to one surface to an anode.

Referring to FIG. 9, in the electrochemical cell 900, the electrode-film assembly 700 may be folded at an angle of about 180° such that the cathode 500 of the electrode-film assembly 700 comes into contact with each of a first surface 803 of a gas diffusion layer 800 and a second surface 804 opposite to the first surface 803. The cathode 500 of the folded electrode-film assembly 700 may come into contact with each of the first surface 803 of the gas diffusion layer 800 and the second surface 804 opposite to the first surface 803, so that active metal ions may be transferred to the gas diffusion layer 800. Therefore, the discharge capacity and the energy density of the electrochemical cell 900 may be improved compared to an existing electrochemical cell that has the same weight as the electrochemical cell 900 and is able to transfer active metal ions only to one surface to a gas diffusion layer.

In the electrochemical cell 900, the electrode-film assembly 700 may be folded multiple times in a thickness direction of the electrode-film assembly 700 to provide a three-dimensional (3D) electrochemical cell.

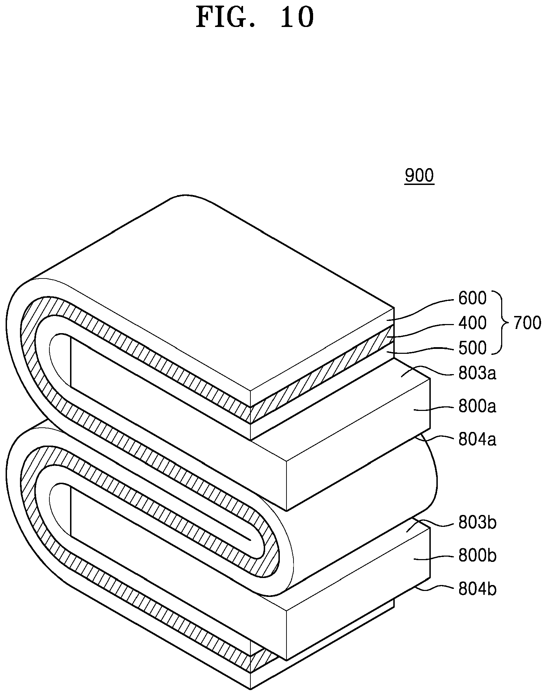

Referring to FIG. 10, the 3D electrochemical cell 900 may include a plurality of gas diffusion layers 800a and 800b that are spaced apart from each other in a thickness direction of the electrochemical cell 900. An electrode-film assembly 700 may be folded at an angle of about 180° such that a cathode 500 of the electrode-film assembly 700 comes into contact with each of first surfaces 803a and 803b and second surfaces 804a and 804b, which are respectively opposite to the first surfaces 803a and 803b, of the plurality of gas diffusion layers 800a and 800b. Further, an anode 600 of the electrode-film assembly 700 may be folded at an angle of about 180° and overlaps between the plurality of gas diffusion layers 800a and 800b. The electrode-film assembly 700 may include the cathode 500, the anode 600, and a composite electrolyte film 400. In the 3D electrochemical cell 900, a folded position, a number of folds, and a direction of the folds of the electrode-film assembly 700 may be selected according to a specific shape of the 3D electrochemical cell 900 to be manufactured. Although not illustrated in FIG. 10, a plurality of 3D electrochemical cells 900 may be laminated (stacked) to constitute an electrochemical cell module.

Referring to FIGS. 7 to 10, the electrochemical cell 900 may be a metal air cell or a lithium secondary cell.

For example, the electrochemical cell 900 may be a metal air cell.

In the metal air cell, a cathode 500 using oxygen as a positive electrode active material may include a conductive material. The conductive material may be a porous particle. The cathode 500 may include any suitable material as the positive electrode active material without limitation as long as the material has suitable porosity and conductivity. For example, the cathode 500 may include a carbon-based material having porosity. Examples of the carbon-based material may include at least one selected from carbon black, graphite, graphene, activated carbon, a carbon fiber, and a carbon nanotube.

In addition, examples of the positive electrode active material may include metallic conductive materials such as metal fibers and metal meshes. Furthermore, examples of the positive electrode active material may include metallic powders such as copper powders, silver powders, nickel powders, and aluminum powders. The positive electrode active material may include an organic conductive material such as a polyphenylene derivative. The conductive material may be used solely or in a combination comprising at least one of the foregoing.

A catalyst for oxidizing/reducing oxygen may be added to the cathode 500 of the metal air cell. Examples of the catalyst may include at least one selected from a noble metal-based catalyst such as platinum, gold, silver, palladium, ruthenium, rhodium, and osmium; an oxide-based catalyst such as manganese oxide, iron oxide, cobalt oxide, and nickel oxide; and an organic metal-based catalyst such as cobalt phthalocyanine; but are not limited thereto. The catalyst may include any suitable material as long as the material is applicable to a catalyst for oxidizing/reducing oxygen in the art. A combination comprising at least one of the foregoing may be used.

In addition, the catalyst may be impregnated in a carrier. Examples of the carrier may include at least one selected from oxide, zeolite, a clay mineral, and carbon. Examples of the oxide may include at least one selected from alumina, silica, zirconium oxide, and titanium dioxide. Examples of the oxide may include an oxide including at least one selected from cerium (Ce), praseodymium (Pr), samarium (Sm), europium (Eu), terbium (Tb), thulium (Tm), ytterbium (Yb), antimony (Sb), bismuth (Bi), vanadium (V), chromium (Cr), manganese (Mn), iron (Fe), cobalt (Co), nickel (Ni), copper (Cu), niobium (Nb), molybdenum (Mo), and tungsten (W). Examples of the carbon may include at least one selected from carbon black such as ketjen black, acetylene black, channel black, or lamp black, graphite such as natural graphite, artificial graphite, or expanded graphite, activated carbon, and a carbon fiber, but are not limited thereto. The carbon may include any suitable material as long as the material is applicable to a carrier in the art.

The cathode 500 of the metal air cell may additionally include a binder. Examples of the binder may include at least one selected from a thermoplastic resin and a thermosetting resin. Examples of the binder may include at least one selected from polyethylene, polypropylene, polytetrafluoroethylene (PTFE), polyvinylidene fluoride (PVDF), styrene-butadiene rubber, a tetrafluoroethylene-perfluoroalkyl vinyl ether copolymer, a vinylidene fluoride hexafluoropropylene copolymer, a vinylidene fluoride/chlorotrifluoroethylene copolymer, an ethylene-tetrafluoroethylene copolymer, a polychloro-trifluoroethylene copolymer, a vinylidene fluoride-pentafluoro propylene copolymer, a propylene-tetrafluoroethylene copolymer, an ethylene-chlorotrifluoroethylene copolymer, a vinylidene fluoride-hexafluoropropylene-tetrafluoroethylene copolymer, a vinylidene fluoride-perfluoroalkyl vinyl ether-tetrafluoroethylene copolymer, and an ethylene-acrylic acid copolymer, which are used solely or in combination. However, the binder is not limited thereto and may include any suitable material as long as the material is applicable to a binder in the art.

The cathode 500 of the metal air cell may additionally include an ion conductive polyelectrolyte. Examples of the ion conductive polyelectrolyte may include at least one selected from polyethylene oxide (PEO), polyvinyl alcohol (PVA), polyvinylpyrrolidone (PVP), and polyvinyl sulfone, e.g., a polymer which is doped with lithium. For example, an ion conductive polymer solid electrolyte may be polyethylene oxide doped with a lithium salt. The doped lithium salt may be substantially the same as a lithium salt included in the first to third electrolyte described above.

The cathode 500 of the metal air cell may be prepared by, for example, mixing the conductive material, the binder, and the catalyst for oxidizing/reducing oxygen, adding an appropriate solvent to the resultant mixture to prepare a cathode slurry, and applying the prepared cathode slurry on a surface of a current collector to dry the resultant structure or selectively compression-molding the prepared cathode slurry on the current collector so as to improve an electrode density. In addition, the cathode 500 of the metal air cell may selectively include lithium oxide. Furthermore, the catalyst for oxidizing/reducing oxygen may be selectively omitted.

An anode 600 of the metal air cell may include at least one selected from an alkali metal (e.g., lithium, sodium, or potassium), an alkaline earth metal (e.g., calcium, magnesium, or barium), and/or a transition metal (e.g., zinc), and may include alloys thereof.

The aforementioned composite electrolyte film 400 may be disposed between the cathode 500 and the anode 600 of the metal air cell. Since the composite electrolyte film 400 is disposed between the cathode 500 and the anode 600, it may be possible to efficiently prevent oxygen and moisture from being transferred from the cathode 500 to the anode 600. Accordingly, the deterioration of the metal air cell may be prevented. In addition, since the composite electrolyte film 400 is light in weight, it may be possible to improve the energy density of the metal air cell. The metal air cell may be, for example, a lithium air battery or a sodium air battery.

Alternatively, the electrochemical cell 900 may be a lithium secondary cell.

The lithium secondary cell may be, for example, a lithium sulfur secondary cell or a lithium ion secondary cell.

In the lithium sulfur secondary cell, examples of a positive electrode active material in a cathode 500 may include at least one selected from elemental sulfur (S8) and an elemental sulfur-containing compound. Examples of the elemental sulfur-containing compound may include at least one selected from Li₂Sₙ (n≥1), dissolved in a catholyte, an organic sulfur compound, and a carbon-sulfur polymer ((C₂Sₓ)ₙ, where x=2.5 to 50, and n≥2).

In the lithium sulfur secondary cell, examples of a negative electrode active material in an anode 600 may include a carbonaceous material as a material that is capable of reversibly intercalating/deintercalating lithium ions.

The carbonaceous material may include any suitable carbon-based negative electrode active material that is used in the lithium sulfur secondary cell. Representative examples of the carbonaceous material may include one selected from crystalline carbon and amorphous carbon. In addition, representative examples of a material, which is able to reversibly react with the lithium ions to form a lithium-containing compound, may include at least one selected from tin oxide (SnO₂), titanium nitrate, and silicon (Si), but are not limited thereto. A lithium alloy may include an alloy of lithium and a metal that includes at least one selected from sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

In the lithium ion secondary cell, examples of a positive electrode active material in a cathode 500 may include a compound (lithiated intercalation compound) that is capable of reversibly intercalating/deintercalating lithium ions. Examples of the positive electrode active material may include at least one selected from lithium cobalt oxide, lithium nickel cobalt manganese oxide, lithium nickel cobalt aluminum oxide, lithium iron phosphate, and lithium manganese oxide, but are not limited thereto. The positive electrode active material may include any suitable positive electrode active material as long as the positive electrode active material is applicable to the art.

Specifically, examples of the positive electrode active material may include at least one selected from lithium cobalt oxide expressed by Formula LiCoO₂; lithium nickel oxide expressed by Formula LiNiO₂; lithium manganese oxide expressed by Formula Li₁₊ₓMn₂₋ₓO₄ (where, x is 0 to 0.33), LiMnO₃, LiMn₂O₃, or LiMnO₂; lithium copper oxide expressed by Formula Li₂CuO₂; lithium iron oxide expressed by Formula LiFe₃O₄; lithium vanadium oxide expressed by Formula LiV₃O₈; copper vanadium oxide expressed by Formula Cu₂V₂O₇; vanadium oxide expressed by Formula V₂O₅; lithium nickel oxide expressed by Formula LiNi₁-MₓO₂ (where, M=Co, Mn, Al, Cu, Fe, Mg, B (boron), or Ga, and x=0.01 to 0.3); lithium manganese composite oxide expressed by Formula LiMn₂₋ₓMₓO₂ (where, M=Co, Ni, Fe, Cr, Zn or Ta, and x=0.01 to 0.1) or Li₂Mn₃MO₈ (where, M=Fe, Co, Ni, Cu, or Zn); lithium manganese oxide expressed by Formula LiMn₂O₄, in which some of Li are substituted with alkaline earth metal ions; a disulfide compound; and iron molybdenum oxide expressed by Formula Fe₂(MoO₄)₃.

In the lithium ion secondary cell, examples of a negative electrode active material in an anode 600 may include at least one selected from Si, SiOₓ (0<x<2, for example, x is 0.5 to 1.5), Sn, SnO₂, and a silicon-containing metal alloy. Examples of a metal, which is capable of forming the silicon-containing metal ally, may include at least one selected from Al, Sn, Ag, Fe, Bi, Mg, Zn, In, Ge, Pb, and Ti.

Specifically, examples of the negative electrode active material may include one selected from lithium-alloyable metals/metalloids, alloys thereof, and oxides thereof. Examples of the lithium-alloyable metals/metalloids may include at least one selected from Si, Sn, Al, Ge, Pb, Bi, Sb, and a Si-Y' alloy (where Y' includes one selected from an alkali metal, an alkaline earth metal, a Group 13 element, a Group 14 element, a transition metal, a rare earth element, and combinations thereof and does not include Si), may include an Sn-Y" alloy (where Y" includes one selected from an alkali metal, an alkaline earth metal, a Group 13 element, a Group 14 element, a transition metal, a rare earth element, and combinations thereof and does not include Sn), or may include MnOx (0<x≤2). The elements Y' and Y" may include at least one selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, and Po. Examples of oxides of the lithium-alloyable metals/metalloids may include at least one selected from lithium titanium oxide, vanadium oxide, lithium vanadium oxide, SnO₂, and SiOₓ (0<x<2).

Examples of the negative electrode active material may include a mixture of a carbon-based material and at least one selected from the above-described silicon, silicon oxides, and silicon-containing metal alloy, and may include a composite of a carbon-based material and at least one selected from the above-described silicon, silicon oxides, and silicon-containing metal alloy.

The negative electrode active material may have a simple particle shape and may have a nano-sized nanostructure. For example, the negative electrode active material may have any suitable shape and may be in a form such as nanoparticles, nanowires, nanorods, nanotubes, and nanobelts.

The aforementioned composite electrolyte film 400 may be disposed between the cathode 500 and the anode 600 of the lithium secondary cell. Since the composite electrolyte film 400 is disposed between the cathode 500 and the anode 600, it may be possible to more efficiently prevent oxygen and moisture from being transferred the anode 600. Accordingly, it may be possible to prevent the deterioration of the lithium secondary cell, in particular, a lithium anode. In addition, since the composite electrolyte film 400 is light in weight, it may be possible to improve the energy density of the lithium secondary cell.

According to the invention, a method of preparing a composite electrolyte film includes providing a porous membrane; forming a 2D nanostructure layer on a first surface of the porous membrane; and impregnating an electrolyte in the porous membrane and the 2D nanostructure by pressing to prepare the composite electrolyte film.

According to the method of preparing the composite electrolyte film, it may be possible to more easily prepare a composite electrolyte film that is light in weight, thin, and flexible and is capable of blocking oxygen. In addition, it may be possible to manufacture an electrochemical cell that includes the composite electrolyte film to have an improved energy density.

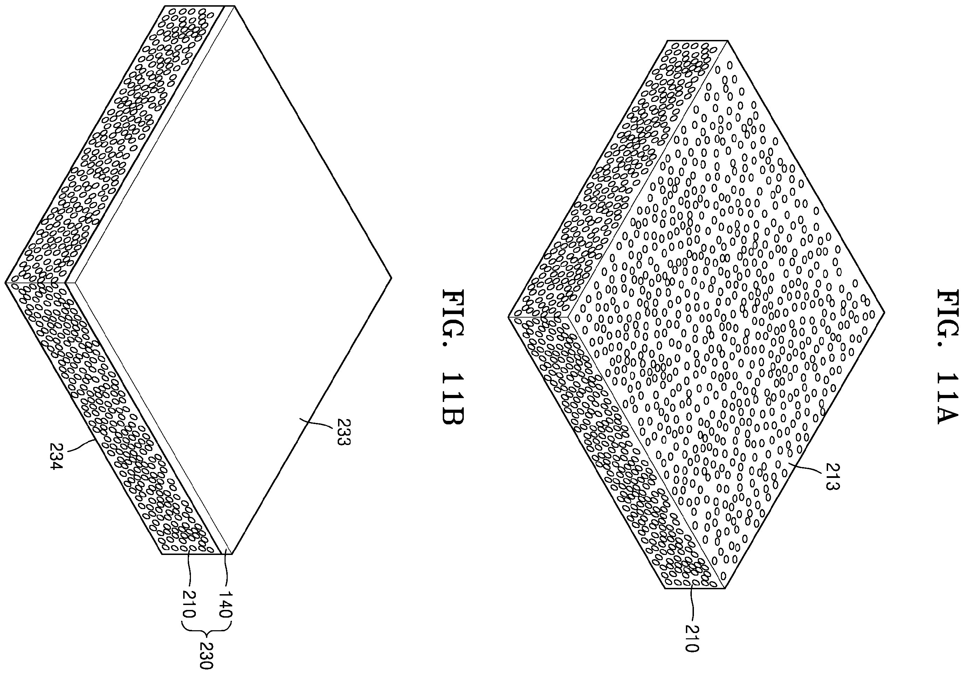

Referring to FIG. 11A to 11D, a method of preparing a composite electrolyte film 400 may include preparing a porous membrane 210; forming a 2D nanostructure layer 140 on a first surface 213 of the porous membrane 210; and preparing the composite electrolyte film 400 by impregnating an electrolyte in the porous membrane 210 and the 2D nanostructure layer 140.

Referring to FIG. 11A, the porous membrane 210 may be a free standing film and may be provided without a support. Since the porous membrane 210 may be a free standing film, a working efficiency of the porous membrane 210 may be improved, and the porous membrane 210 may be more easily prepared so as to have a large area. Alternatively, the porous membrane 210 may be prepared supported by a carrier. The carrier may be removed later.

Referring to FIG. 11B, the 2D nanostructure layer 140 may be formed on the first surface 213 of the porous membrane 210. The 2D nanostructure layer 140 may be formed through coating using at least one selected from a vacuum assisted filtration process, a bar coating process, a spin coating process, a solvent coating process, and a spray coating process, but is not limited thereto. The 2D nanostructure layer 140 may be formed using any suitable process as long as the process is able to form a 2D nanostructure layer in the art. The vacuum assisted filtration process may be a process of coating the first surface 213 of the porous membrane 210 with a 2D nanostructure-containing solution and then, filtering out a solvent and removing the solvent from a second surface of the porous membrane 210 in a vacuum state.

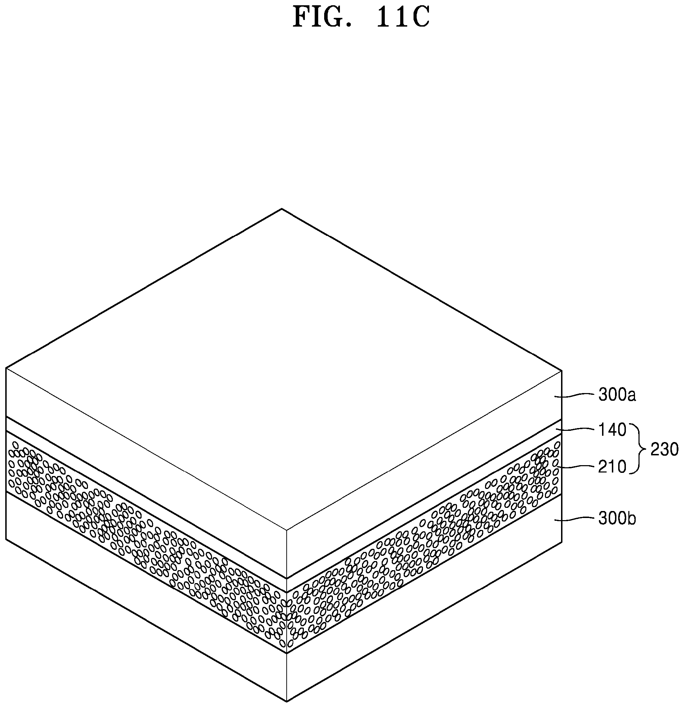

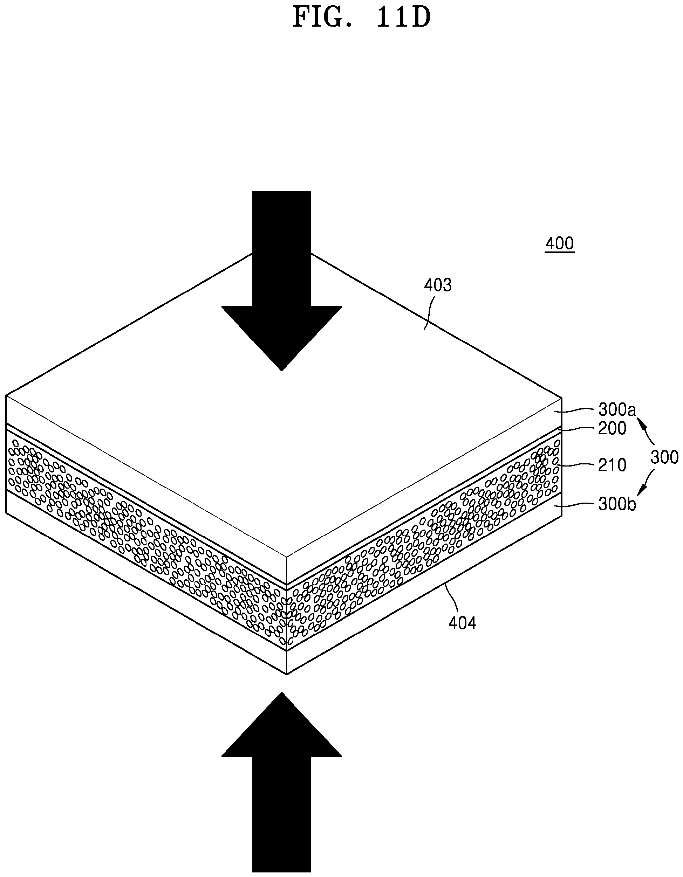

Referring to FIGS. 11C and 11D, the impregnating of the electrolyte in the porous membrane 210 and the 2D nanostructure layer 140 may include respectively disposing electrolyte layers 300 (e.g., first and second electrolyte layers 300a and 300b, respectively) on at least one surface of a first surface 233 of a laminate 230 and a second surface 234, opposite to the first surface 233, of the laminate 230 including the porous membrane 210 and the 2D nanostructure layer 140; and preparing the composite electrolyte film 400 by pressing each of the electrolyte layers 300 (e.g., first and second electrolyte layers 300a and 300b, respectively) toward the laminate 230. The electrolyte may be impregnated in the 2D nanostructure layer 140 and the porous membrane 210 by pressing the electrolyte layers 300 (e.g., first and second electrolyte layers 300a and 300b, respectively) toward the laminate 230. The disposing of the electrolyte layers 300 (including first and second electrolyte layers 300a and 300b, respectively) on at least one surface of the first surface 233 of the laminate 230 and the second surface 234 opposite to the first surface 233 may be performed by disposing separate electrolyte layers, or coating the at least one surface with an electrolyte-containing solution and drying the coated electrolyte-containing solution to form an electrolyte layer. However, the disposing of the electrolyte layers 300 (e.g., first and second electrolyte layers 300a and 300b, respectively) is not limited thereto and may be performed using any method as long as the method is capable of disposing an electrolyte layer in the art.

Referring to FIG. 11D, after preparing the composite electrolyte film 400 by pressing the electrolyte layers 300 (e.g., first and second electrolyte layers 300a and 300b, respectively) toward the laminate 230, the method of preparing the composite electrolyte film 400 may further include quickly cooling the composite electrolyte film 400. An electrolyte composition may be maintained in a state of being unchanged in the composite electrolyte film 400 by quickly cooling the composite electrolyte film 400 prepared by the pressing. The coating may be at a rate of about 0.1°C per minute to about 1000°C per minute, or about 1°C per minute to about 100°C per minute.

Referring to FIG. 11D, after the pressing, e.g., hot pressing, the composite electrolyte film 400 prepared through the pressing may be cooled to a temperature of about 80°C within about 10 minutes through the quick cooling and may be cooled to a temperature of about 50°C for about 20 minutes. For example, after the pressing, the composite electrolyte film 400 prepared through the pressing may be cooled to a temperature of about 80°C within about 5 minutes through the quick cooling and may be cooled to a temperature of about 40°C for about 20 minutes. For example, after the pressing, the composite electrolyte film 400 prepared through the pressing may be cooled to a temperature of about 80°C within about 2 minutes through the quick cooling and may be cooled to a temperature of about 35°C for about 20 minutes. For example, after the pressing, the composite electrolyte film 400 prepared through the pressing may be cooled to a temperature of about 80°C within about 1 minute through the quick cooling and may be cooled to a temperature of about 30°C for about 20 minutes. For example, after the pressing, the composite electrolyte film 400 prepared through the pressing may be cooled to a temperature of about 80°C within about 1 minute through the quick cooling and may be cooled to a temperature of about 25°C for about 20 minutes. In some exemplary embodiments, after hot-pressing, the composite electrolyte film 400 prepared through the pressing may be cooled to a temperature of about 80°C for about 100 minutes through natural cooling.

Referring to FIG. 11D, the pressing may be hot-pressing, but is not limited thereto. The pressing may include any suitable pressing process as long as the pressing process is applicable to a preparation of a composite electrolyte film in the art.

Referring to FIG. 11D, an electrochemical cell may be manufactured by further disposing a cathode (not illustrated) and an anode (not illustrated) on a first surface 403 of the composite electrolyte film 400 and a second surface 404 opposite to the first surface 403.

The electrochemical cell may be used to provide a lithium primary cell or a lithium secondary cell. A shape of the electrochemical cell is not particularly limited and may have, for example, a coin shape, a button shape, a sheet shape, a laminate shape, a cylindrical shape, a flat shape, or a horn shape. In addition, the electrochemical cell may also be used as a large-sized cell used in an electric vehicle or the like.

The term "air" used in the specification is not limited to air in the atmosphere and may include one selected from a pure oxygen gas and combinations of gases including oxygen. A broad definition with respect to the term "air" may be applied to all of applications, for example, an air cell, an air electrode, and the like.

Hereinafter, the present disclosure will be described in more detail through Examples and Comparative Examples. However, Examples are provided to illustrate the present disclosure and not to limit it.

### EXAMPLES

### (Preparation of Composite Electrolyte Film)

### Example 1: PEO/GO/SKI/PEO

A mixture solution of water and ethanol (mixed in a volume ratio of about 1:1) was prepared, wherein the mixture solution includes about 0.025 weight% of graphene oxide (UHC-GO-175 manufactured by Graphene Supermarket). Interspacing (d₀₀₂) of graphene oxide (GO) was about 0.81 nanometers (nm).

A porous separator coated with graphene oxide was prepared by coating a first surface of a 12 micrometer (µm)-thickness porous separator (TM123AHS manufactured by SK Innovation) with the mixture solution using a vacuum filtration apparatus. A weight of the coated graphene oxide layer was about 0.05 milligrams per square centimeter (mg/cm²).

A polyethylene oxide (PEO) solution was obtained by dissolving about 16.32 grams (g) of polyethylene oxide (PEO, 182028 manufactured by Sigma-Aldrich) with a weight average molecular weight (Mw) of 600,000 in about 150 mL of acetonitrile. LiTFSi was introduced into the obtained PEO solution while stirring the solution such that a molar ratio of ethylene oxide (EO) to lithium (Li) was about 18:1 to form a resultant solution. The resultant solution was coated on the first surface of the porous separator, coated with graphene oxide, to a thickness of about 150 µm and the coated solution was vacuum dried at a temperature of about 80°C for about 4 hours. Then, the resultant solution was coated on a second surface of the porous separator to a thickness of about 150 µm and the coated solution was vacuum dried at a temperature of about 80°C for about 4 hours to prepare a laminate. A composite electrolyte film having a shape of a free standing film was prepared by disposing the laminate between polytetrafluoroethylene (PTFE) films, hot-pressing the laminate and the PTFE films at a pressure of about 2 kilograms-force per square centimeter (kgf/cm²) at a temperature of about 120°C for about 1 hour using a press, and quickly cooling the hot-pressed laminate and PTFE films. After the hot-pressing, the hot-pressed laminate and PTFE films were cooled to a temperature of about 80°C within about 1 minute through the quick cooling and may be cooled to a temperature of about 30°C for about 20 minutes.

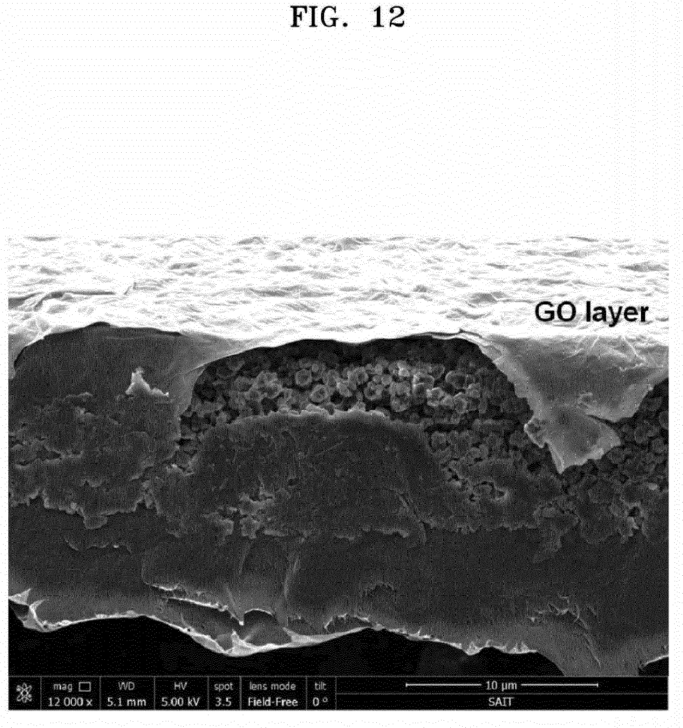

A SEM image of a cross section in the prepared porous separator coated with graphene oxide was illustrated in FIG. 12. As illustrated in FIG. 12, a graphene oxide coating layer is disposed on the porous separator.

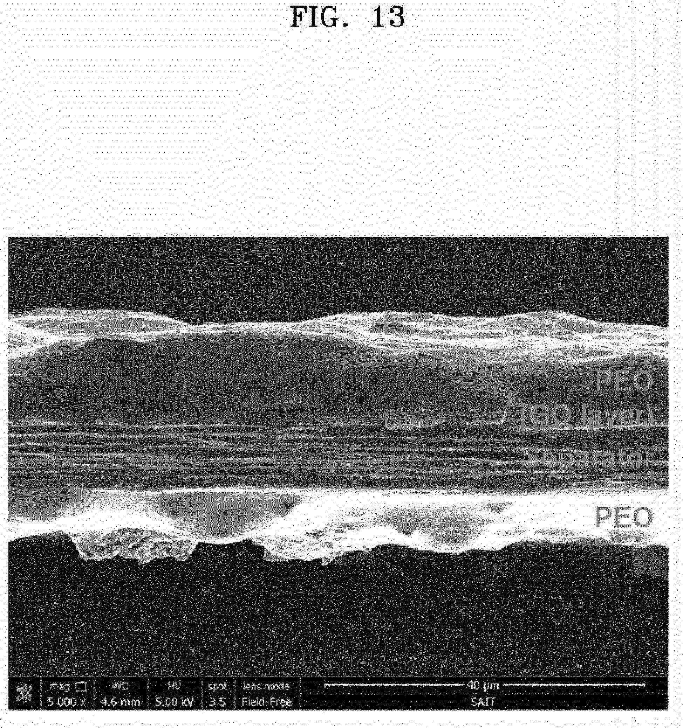

A SEM image of a cross section in the prepared composite electrolyte film impregnated with an electrolyte was illustrated in FIG. 13. As illustrated in FIG. 13, electrolyte layers are disposed on both surfaces of a porous membrane. A thickness of a PEO electrolyte layer was about 6 µm.

Although not illustrated in FIG. 13, it was confirmed that graphene oxide was non-periodically and disorderedly disposed in a thickness direction of the composite electrolyte layer by measuring a TEM image of a cross section in a composite electrolyte layer disposed between the porous membrane and the electrolyte layers. In addition, it was confirmed that graphene oxide was spaced apart from the composite electrolyte layer in a direction parallel to the composite electrolyte layer.

A thickness of the composite electrolyte film was about 24 µm.

In the composite electrolyte film, a composition ratio of the porous separator to the electrolyte was about 1:2.6 based on weight.

In the composite electrolyte film, a composition ratio of a 2D nanostructure to the electrolyte was about 1:1 based on weight.

### Example 2: PEO/rGO/SKI/PEO

A composite electrolyte film was prepared in the same manner as Example 1 except that reduced graphene oxide (rGO) was used instead of graphene oxide.

Interspacing (d₀₀₂) of reduced graphene oxide (rGO) was about 0.39 nm.

A thickness of the composite electrolyte film was about 31 µm.

Reduced graphene oxide (rGO) was prepared as follows.

About 80 mL of an aqueous solution was prepared, wherein the aqueous solution includes 0.025 weight% of graphene oxide (UHC-GO-175 manufactured by Graphene Supermarket). A reduced graphene oxide dispersed solution was prepared by mixing about 2 mL of an ammonia solution (NH₄OH, 28%, A0628 manufactured by SAMCHUN Chemical) for improving dispersibility and about 40 µL of hydrazine hydrate (225819 manufactured by Sigma-Aldrich) as a reducing agent into the aqueous solution, and stirring the resultant mixture at a temperature of about 90°C for about 1 hour.

### Comparative Example 1: PEO/SKI/PEO

A composite electrolyte film was prepared in the same manner as Example 1 except that a graphene oxide coating layer was omitted.

### Comparative Example 2: LTAP

A 260 µm-thickness LICGC™ (LATP manufactured by Ohara Company) film, i.e., an inorganic lithium ion conductor was used as a composite electrolyte film as it is.

### (Manufacture of Lithium Air Cell)

### Example 3

### (Preparation of Cathode)

Carbon black (Printex® manufactured by Orion Engineered Chemicals in U.S.A.), i.e., a carbon-based porous particle, and a polytetrafluoroethylene (PTFE) binder (powder manufactured by Sigma-Aldrich) were prepared in a weight ratio of about 1:0.2.

A rectangular porous particle layer having an area of about 6 cm² (2 cm×3 cm) and a thickness of about 30 µm was prepared by mechanically kneading the prepared carbon black and PTFE binder, pressing the kneaded carbon black and PTFE binder to a thickness of about 30 µm using a roll press, and drying the pressed carbon black and PTFE binder at a temperature of about 60°C in an oven.

A polyethylene oxide (PEO) solution was obtained by dissolving 16.32 g of polyethylene oxide (PEO, 182028 manufactured by Sigma-Aldrich) with an average Mw of 600,000 in about 150 mL of acetonitrile. First electrolyte films were prepared by introducing LiTFSi into the obtained PEO solution such that a molar ratio of EO to Li was about 18:1, coating, with the resultant solution, a 50 µm-thickness Teflon film to a thickness of about 100 µm while stirring the resultant solution, and vacuum-drying the resultant solution and the Teflon film at a temperature of about 80°C for about 4 hours.

A laminate was prepared by respectively disposing the obtained first electrolyte films on first and second surfaces of the rectangular porous particle layer. A cathode having a shape of a free standing film was prepared by disposing the laminate between PTFE films and hot-pressing the laminate and the PTFE films at a temperature of about 120°C using a press. A thickness of the cathode was about 33 µm.

In the cathode, a composition ratio of the carbon black to a first electrolyte was about 1:2.4 based on weight.

### (Preparation of Electrolyte Film)

The composite electrolyte film prepared in Example 1 was used.

### (Manufacture of Lithium Air Cell)

A cathode-film laminate was prepared by disposing two cathodes, i.e., cathode film, (each of the films has an area of about 1 cmx3 cm) were disposed on a first surface of an electrolyte film (about 2.4 cmx3.4 cm) so as to be spaced apart by a gap of about 0.5 mm from each other. A cathode-film assembly having a shape of a free standing film was prepared by disposing the cathode-film laminate between PTFE films, hot-pressing the cathode-film laminate and the PTFE films at a temperature of about 100°C for about 10 minutes, and quickly cooling the cathode-film laminate and the PTFE films in a state of being pressured for about 20 minutes. After the hot-pressing, the hot-pressed laminate and PTFE films were cooled to a temperature of about 80°C within about 1 minute through the quick cooling and may be cooled to a temperature of about 30°C for about 20 minutes.

A carbon paper (about 2 cm×3 cm, 25BA manufactured by SGL in Germany), that is, a gas diffusion layer was disposed between the two cathodes while the cathode-film assembly was folded such that the two cathodes faced each other.

A gas diffusion layer/cathode/electrolyte film/anode structure was prepared by disposing an lithium metal having a thickness of about 30 µm and an area of about 2.15 cmx3 cm on a second surface of the electrolyte film and folding the lithium metal and the cathode-film assembly including the gas diffusion layer such that the lithium metal was symmetric with the cathode with respect to the electrolyte film.

A portion of the gas diffusion layer protruding from a cathode area may function as a positive current collector. A Cu sheet was disposed on one surface of the lithium metal to be used as a negative current collector.

A lithium air cell was manufactured by respectively disposing end plates on the negative current collector and an anode opposite to the negative current collector. For example, FIG. 9 may be referenced for the prepared lithium air cell.

### Example 4

A lithium air cell was manufactured in the same manner as Example 3 except that the composite electrolyte film prepared in Example 2 was used.

### Comparative Examples 3 and 4

Lithium air cells were manufactured in the same manner as Example 3 except that the composite electrolyte films prepared in Comparative Examples 1 and 2 were respectively used.

### Example 5: Manufacture of 3D Lithium Air Cell and Cell Module

A cathode-film laminate was prepared by disposing a cathode having an area of about 104.5 cm² (about 5 cmx 20.9 cm) on a first surface of the composite electrolyte film (about 5.2x 22 cm) prepared in Example 1. A cathode-film assembly having a shape of a free standing film was prepared by disposing the cathode-film laminate between PTFE films, hot-pressing the cathode-film laminate and the PTFE films at a temperature of about 100°C for about 10 minutes, and quickly cooling the cathode-film laminate and the PTFE films in a state of being pressured for about 20 minutes.

A cathode/electrolyte film/anode structure was prepared by disposing and assembling the cathode-film assembly and a lithium metal having a thickness of about 30 µm and an area of about 5 cm×20.9 cm in assembly equipment.

In addition, in the assembly equipment, the cathode/electrolyte film/anode structure was folded at an angle of about 180° to surround a gas diffusion layer having an area of about 5 cmx2 cm such that the gas diffusion layer was disposed on the cathode of the cathode/electrolyte film/anode structure and was re-folded at an angle of about 180° in an opposite direction. An operation of folding the cathode/electrolyte film/anode structure at the angle of about 180° was performed 10 times to manufacture a 3D lithium air cell. For example, FIG. 10 may be referenced for the 3D lithium air cell.

Five 3D lithium air cells were laminated to manufacture a lithium air cell module.

A portion protruding from a cathode area of the gas diffusion layer may function as a positive current collector. A Cu sheet was disposed on one surface of the lithium metal to be used as a negative current collector. End plates were disposed on the negative current collector and an anode opposite to the negative current collector, respectively.

### Evaluation Example 1: Evaluation of Physical Properties in Composite Electrolyte Film

A thickness, a weight per unit area, an ionic resistance, an oxygen transfer rate, and flexibility were measured with respect to each of the composite electrolyte films prepared in Examples 1 and 2 and Comparative Examples 1 and 2. The measurement results were shown in Table 1 below.

The ionic resistance of the composite electrolyte film was measured in a 2-probe method using Solartron 1260A Impedance/Gain-Phase Analyzer. A current density was about 0.4 A/cm², an amplitude was about ±10 mV, and a frequency range was from about 0.1 Hz to about 10 KHz.

The oxygen transfer rate was obtained by measuring an oxygen transfer rate of a composite electrolyte film having an area of about 1 cm² in an influent oxygen atmosphere having room temperature and a pressure of about 760 mmHg using an oxygen transfer rate tester (MOCON OX-TRAN Model 2/21).

The flexibility was determined according to whether the composite electrolyte film was fractured by applying a force to the composite electrolyte film in a thickness direction thereof. "X" means that the composite electrolyte film was fractured, and "O" means that the composite electrolyte was not fractured but folded.

**Table 1**

| | Thickness | Weight | Ionic Resistance | Oxygen Transfer Rate | Flexibility |
|---|---|---|---|---|---|
| | [µm] | [mg/cm²] | | | |
| | | | [ohm·cm²] | [mL/m²·day] | |
| Example 1 | 24 | 3.2 | 100 | 250 | ○ |
| Example 2 | 31 | 3.7 | 120 | 110 | ○ |
| Comparative Example 1 | 41 | 4.2 | 20 | Unmeasurable | ○ |
| Comparative Example 2 | 250 | 88 | 260 | 8 | X |

As shown in Table 1, the composite electrolyte films of Examples 1 and 2 has a considerably reduced weight and ion resistance and excellent flexibility compared to the ceramic solid electrolyte film of Comparative Example 2. In addition, the composite electrolyte films of Examples 1 and 2 has a considerably reduced oxygen transfer rate compared to the composite electrolyte film of Comparative Example 1.

That is, the composite electrolyte films of Examples 1 and 2 had good ion conductivity and oxygen barrier characteristics at the same time.

The oxygen transfer rate of the composite electrolyte film of Comparative Example 1 was unmeasurable due to a too high oxygen transfer rate thereof.

The ceramic solid electrolyte film of the Comparative Example 2 was fractured (brittle) when the ceramic solid electrolyte film was folded by applying a force to the ceramic solid electrolyte film in a thickness direction thereof.

### Evaluation example 2: Evaluation of Charge/discharge Characteristics

It was confirmed that the lithium air cells operated by performing a charge/discharge cycle on each of the lithium air cells manufactured in Examples 3 and 4 and the lithium air cell module manufactured in Example 5, the charge/discharge cycle including discharging each of the lithium air cells and the lithium air cell module to about 1.7 V (vs. Li) at a constant current of about 0.24 mA/cm² and charging each of the lithium air cells and the lithium air cell module to about 4.3 V (vs. Li) with the same current in an oxygen atmosphere having a pressure of about 1 atm and a temperature of about 60°.

Therefore, a lithium air cell, which was excellent in oxygen barrier characteristics, flexible, thin, and light in weight and had a reduced volume and an improved energy density, was implemented.

According to an aspect, an energy density of an electrochemical cell may be improved by employing a composite electrolyte film having a novel structure.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While an exemplary embodiment has been disclosed with reference to the figures, it will be understood by those of ordinary skill in the art that various changes in form and details may be made therein without departing from the scope as defined by the following claims.

## Claims

1. A composite electrolyte film comprising:
an ionically conductive substrate;
a composite electrolyte layer disposed on a first surface of the ionically conductive substrate, opposite to a second surface; and
an electrolyte layer disposed on the second surface of the ionically conductive substrate,
wherein the composite electrolyte layer comprises:
a first domain comprising a plurality of two-dimensional nanostructures; and
a second domain which is disposed in an interstitial space between neighboring two-dimensional nanostructures of the plurality of two-dimensional nanostructures;
wherein the second domain comprises a first electrolyte.

2. The composite electrolyte film of claim 1, wherein the first domain comprises two-dimensional nanostructures that are non-periodically arranged in a thickness direction of the composite electrolyte layer or wherein the two-dimensional nanostructures are disordered in a thickness direction of the composite electrolyte layer.

3. The composite electrolyte film of claim 1 or 2, wherein the two-dimensional nanostructures are spaced apart from one another in a direction parallel to a first surface of the composite electrolyte layer.

4. The composite electrolyte film of any of claims 1-3, wherein the second domain ionically connects a first surface of the composite electrolyte layer and a second surface opposite to the first surface.

5. The composite electrolyte film of any of claims 1-4, wherein each two-dimensional nanostructure of the plurality of two-dimensional nanostructures comprises a carbon-containing material.

6. The composite electrolyte film of any of claims 1-5, wherein each two-dimensional nanostructure of the plurality of two-dimensional nanostructures comprises exfoliated graphene or comprises at least one selected from graphene oxide, reduced graphene oxide, and a modified graphene oxide.

7. The composite electrolyte film of any of claims 1-6, wherein the first electrolyte comprises at least one selected from a solid electrolyte and a liquid electrolyte.

8. The composite electrolyte film of any of claims 1-7, wherein the first electrolyte comprises at least one selected from polyethylene oxide, polyvinyl alcohol, polyvinylpyrrolidone, and polyvinyl sulfone.

9. An electrochemical cell comprising an electrode-film assembly comprising:
a cathode;
an anode; and
the composite electrolyte film of any of claims 1-8, which is disposed between the cathode and the anode.

10. The electrochemical cell of claim 9, wherein the anode comprises at least one selected from lithium, a lithium alloy, and a lithium-alloyable metal.

11. The electrochemical cell of claim 9 or 10, further comprising a plurality of gas diffusion layers disposed on the cathode.

12. The electrochemical cell of any of claims 9-11, wherein the electrode-film assembly comprises a folded portion.

13. The electrochemical cell of any of claims 9-12, wherein the electrode-film assembly is folded at an angle of about 180° such that at least two portions of the anode overlap each other or wherein the electrode-film assembly is folded at an angle of 180° such that the cathode of the electrode-film assembly contacts each of a first surface of a gas diffusion layer and a second surface opposite to the first surface.

14. The electrochemical cell of claims 12 or 13, wherein:
the plurality of gas diffusion layers are spaced apart from each other in a thickness direction of the electrochemical cell,
the electrode-film assembly is repeatedly folded at an angle of 180° such that the cathode of the electrode-film assembly contacts each of first surfaces of the plurality of gas diffusion layers and second surfaces, which are respectively opposite to the first surfaces, and
the anode of the electrode-film assembly is folded at an angle of about 180° and two facing parts of the folded anode overlaps each other between the two adjacent gas diffusion layers.

15. A method of preparing the composite electrolyte film of any of claims 1-8, the method comprising:
providing a porous membrane;
forming a two-dimensional nanostructure on a first surface of the porous membrane; and
impregnating an electrolyte into the porous membrane and the two-dimensional nanostructure by pressing to prepare the composite electrolyte film;
wherein the impregnating of the electrolyte into the porous membrane and the two-dimensional nanostructure by pressing comprises:
respectively disposing electrolyte layers on a first surface of a laminate and a second surface opposite to the first surface, the laminate comprising the porous membrane and the two-dimensional nanostructure; and
pressing each of the electrolyte layers toward the laminate to prepare the composite electrolyte film.

## Patentansprüche

1. Verbundelektrolytfilm, umfassend:
ein ionenleitfähiges Substrat;
eine Verbundelektrolytschicht mit Anordnung auf einer ersten Oberfläche des ionenleitfähigen Substrats, gegenüber einer zweiten Oberfläche; und
eine Elektrolytschicht mit Anordnung auf der zweiten Oberfläche des ionenleitfähigen Substrats,
wobei die Verbundelektrolytschicht umfasst:
eine erste Domäne umfassend eine Mehrzahl von zweidimensionalen Nanostrukturen; und
eine zweite Domäne, die in einem interstitiellen Raum zwischen benachbarten zweidimensionalen Nanostrukturen der Mehrzahl von zweidimensionalen Nanostrukturen angeordnet ist;
wobei die zweite Domäne einen ersten Elektrolyten umfasst.

2. Verbundelektrolytfilm nach Anspruch 1, wobei die erste Domäne zweidimensionale Nanostrukturen umfasst, die nicht-periodisch in einer Dickenrichtung der Verbundelektrolytschicht angeordnet sind oder wobei die zweidimensionalen Nanostrukturen in einer Dickenrichtung der Verbundelektrolytschicht ungeordnet sind.

3. Verbundelektrolytfilm nach Anspruch 1 oder 2, wobei die zweidimensionalen Nanostrukturen in einer Richtung parallel zu einer ersten Oberfläche der Verbundelektrolytschicht voneinander beabstandet sind.

4. Verbundelektrolytfilm nach einem der Ansprüche 1-3, wobei die zweite Domäne eine erste Oberfläche der Verbundelektrolytschicht und eine zweite Oberfläche gegenüber der ersten Oberfläche ionisch verbindet.

5. Verbundelektrolytfilm nach einem der Ansprüche 1-4, wobei jede zweidimensionale Nanostruktur der Mehrzahl von zweidimensionalen Nanostrukturen ein kohlenstoffhaltiges Material umfasst.

6. Verbundelektrolytfilm nach einem der Ansprüche 1-5, wobei jede zweidimensionale Nanostruktur der Mehrzahl von zweidimensionalen Nanostrukturen exfoliertes Graphen umfasst oder mindestens eines umfasst, das aus Graphenoxid, reduziertem Graphenoxid und einem modifizierten Graphenoxid ausgewählt ist.

7. Verbundelektrolytfilm nach einem der Ansprüche 1-6, wobei der erste Elektrolyt mindestens einen umfasst, der aus einem festen Elektrolyten und einem flüssigen Elektrolyten ausgewählt ist.

8. Verbundelektrolytfilm nach einem der Ansprüche 1-7, wobei der erste Elektrolyt mindestens eines umfasst, das aus Polyethylenoxid, Polyvinylalkohol, Polyvinylpyrrolidon und Polyvinylsulfon ausgewählt ist.

9. Elektrochemische Zelle umfassend eine Elektrodenfilmanordnung, umfassend:
eine Kathode;
eine Anode; und
den Verbundelektrolytfilm nach einem der Ansprüche 1-8, der zwischen der Kathode und der Anode angeordnet ist.

10. Elektrochemische Zelle nach Anspruch 9, wobei die Anode mindestens eine/s umfasst, das/die aus Lithium, einer Lithiumlegierung und einem lithiumlegierbaren Metall ausgewählt ist.

11. Elektrochemische Zelle nach Anspruch 9 oder 10, ferner umfassend eine Mehrzahl von auf der Kathode angeordneten Gasdiffusionsschichten.

12. Elektrochemische Zelle nach einem der Ansprüche 9-11, wobei die Elektrodenfilmanordnung einen gefalteten Abschnitt umfasst.

13. Elektrochemische Zelle nach einem der Ansprüche 9-12, wobei die Elektrodenfilmanordnung unter einem Winkel von etwa 180° gefaltet ist, so dass mindestens zwei Abschnitte der Anode einander überlappen, oder wobei die Elektrodenfilmanordnung unter einem Winkel von 180° gefaltet ist, so dass die Kathode der Elektrodenfilmanordnung jede von einer ersten Oberfläche einer Gasdiffusionsschicht und einer zweiten Oberfläche gegenüber der ersten Oberfläche berührt.

14. Elektrochemische Zelle nach Anspruch 12 oder 13, wobei:
die Mehrzahl von Gasdiffusionsschichten in einer Dickenrichtung der elektrochemischen Zelle voneinander beabstandet sind,
die Elektrodenfilmanordnung wiederholt unter einem Winkel von 180° gefaltet ist, so dass die Kathode der Elektrodenfilmanordnung jede von ersten Oberflächen der Mehrzahl von Gasdiffusionsschichten und zweiten Oberflächen, die jeweils gegenüber den ersten Oberflächen sind, berührt, und
die Anode der Elektrodenfilmanordnung unter einem Winkel von etwa 180° gefaltet ist und zwei gegenüberliegende Teile der gefalteten Anode einander zwischen den zwei benachbarten Gasdiffusionsschichten überlappen.

15. Verfahren zur Herstellung des Verbundelektrolytfilms nach einem der Ansprüche 1-8, wobei das Verfahren umfasst:
Bereitstellen einer porösen Membran;
Bilden einer zweidimensionalen Nanostruktur auf einer ersten Oberfläche der porösen Membran; und
Imprägnieren eines Elektrolyten in die poröse Membran und die zweidimensionale Nanostruktur durch Pressen zum Herstellen des Verbundelektrolytfilms;
wobei das Imprägnieren des Elektrolyten in die poröse Membran und die zweidimensionale Nanostruktur durch Pressen umfasst:
jeweiliges Anordnen von Elektrolytschichten auf einer ersten Oberfläche eines Laminats und einer zweiten Oberfläche gegenüber der ersten Oberfläche, wobei das Laminat die poröse Membran und die zweidimensionale Nanostruktur umfasst; und
Pressen jeder der Elektrolytschichten hin zum Laminat, um den Verbundelektrolytfilm herzustellen.

## Revendications

1. Film d'électrolyte composite comprenant :
un substrat conducteur ioniquement ;
une couche d'électrolyte composite disposée sur une première surface du substrat conducteur ioniquement, opposée à une deuxième surface ; et
une couche d'électrolyte disposée sur la deuxième surface du substrat conducteur ioniquement,
dans lequel la couche d'électrolyte composite comprend :
un premier domaine comprenant une pluralité de nanostructures bidimensionnelles ; et
un deuxième domaine qui est disposé dans un espace interstitiel entre des nanostructures bidimensionnelles voisines de la pluralité de nanostructures bidimensionnelles ;
dans lequel le deuxième domaine comprend un premier électrolyte.

2. Film d'électrolyte composite selon la revendication 1, dans lequel le premier domaine comprend des nanostructures bidimensionnelles qui sont agencées de manière non périodique dans une direction d'épaisseur de la couche d'électrolyte composite ou dans lequel les nanostructures bidimensionnelles sont en désordre dans une direction d'épaisseur de la couche d'électrolyte composite.

3. Film d'électrolyte composite selon la revendication 1 ou 2, dans lequel les nanostructures bidimensionnelles sont espacées les unes des autres dans une direction parallèle à une première surface de la couche d'électrolyte composite.

4. Film d'électrolyte composite selon l'une quelconque des revendications 1 à 3, dans lequel le deuxième domaine connecte ioniquement une première surface de la couche d'électrolyte composite et une deuxième surface opposée à la première surface.

5. Film d'électrolyte composite selon l'une quelconque des revendications 1 à 4, dans lequel chaque nanostructure bidimensionnelle de la pluralité de nanostructures bidimensionnelles comprend un matériau contenant du carbone.

6. Film d'électrolyte composite selon l'une quelconque des revendications 1 à 5, dans lequel chaque nanostructure bidimensionnelle de la pluralité de nanostructures bidimensionnelles comprend du graphène exfolié ou comprend au moins un oxyde sélectionné parmi un oxyde de graphène, un oxyde de graphène réduit, et un oxyde de graphène modifié.

7. Film d'électrolyte composite selon l'une quelconque des revendications 1 à 6, dans lequel le premier électrolyte comprend au moins un électrolyte sélectionné parmi un électrolyte solide et un électrolyte liquide.

8. Film d'électrolyte composite selon l'une quelconque des revendications 1 à 7, dans lequel le premier électrolyte comprend au moins un élément sélectionné parmi l'oxyde de polyéthylène, l'alcool polyvinylique, la polyvinylpyrrolidone, et la polyvinylsulfone.

9. Cellule électrochimique comprenant un ensemble électrode-film comprenant :
une cathode ;
une anode ; et
le film d'électrolyte composite selon l'une quelconque des revendications 1 à 8, qui est disposé entre la cathode et l'anode.

10. Cellule électrochimique selon la revendication 9, dans laquelle l'anode comprend au moins un élément sélectionné parmi le lithium, un alliage de lithium, et un métal pouvant s'allier avec le lithium.

11. Cellule électrochimique selon la revendication 9 ou 10, comprenant en outre une pluralité de couches de diffusion gazeuse disposées sur la cathode.

12. Cellule électrochimique selon l'une quelconque des revendications 9 à 11, dans laquelle l'ensemble électrode-film comprend une partie pliée.

13. Cellule électrochimique selon l'une quelconque des revendications 9 à 12, dans laquelle l'ensemble électrode-film est plié à un angle d'environ 180° de sorte qu'au moins deux parties de l'anode se chevauchent ou dans laquelle l'ensemble électrode-film est plié à un angle de 180° de sorte que la cathode de l'ensemble électrode-film entre en contact avec chacune d'une première surface d'une couche de diffusion gazeuse et d'une deuxième surface opposée à la première surface.

14. Cellule électrochimique selon la revendications 12 ou 13, dans laquelle :
la pluralité de couches de diffusion gazeuse sont espacées les unes des autres dans une direction d'épaisseur de la cellule électrochimique, l'ensemble électrode-film est plié de manière répétée à un angle de 180° de sorte que la cathode de l'ensemble électrode-film entre en contact avec chacune des premières surfaces de la pluralité de couches de diffusion gazeuse et des deuxièmes surfaces, qui sont respectivement opposées aux premières surfaces, et l'anode de l'ensemble électrode-film est pliée à un angle d'environ 180° et deux parties se faisant face de l'anode pliée se chevauchent entre les deux couches de diffusion gazeuses adjacentes.

15. Procédé de préparation d'un film d'électrolyte composite selon l'une quelconque des revendications 1 à 8, le procédé comprenant :
la fourniture d'une membrane poreuse ;
la formation d'une nanostructure bidimensionnelle sur une première surface de la membrane poreuse ; et
l'imprégnation d'un électrolyte dans la membrane poreuse et la nanostructure bidimensionnelle par pression pour préparer le film d'électrolyte composite ;
dans lequel l'imprégnation de l'électrolyte dans la membrane poreuse et la nanostructure bidimensionnelle par pression comprend :
la disposition respective de couches d'électrolyte sur une première surface d'un stratifié et une deuxième surface opposée à la première surface, le stratifié comprenant la membrane poreuse et la nanostructure bidimensionnelle ; et
la pression de chacune des couches d'électrolyte vers le stratifié pour préparer le film d'électrolyte composite.
